(19) Europäisches Patentamt
European Patent Office
Office européen des brevets

(11) **EP 1 160 545 B1**

(12) **EUROPEAN PATENT SPECIFICATION**

(45) Date of publication and mention
of the grant of the patent:
**19.11.2003 Bulletin 2003/47**

(51) Int Cl.⁷: **G01D 15/16**, G03G 15/20,
H05B 1/00

(21) Application number: **01113278.4**

(22) Date of filing: **31.05.2001**

(54) **Thermal control method and device capable of reducing flicker**

Verfahren und Gerät für Heizungsregelung und vermeiden von Temperaturschwangungen

Méthode et dispositif de control thermique et réduction de variation de température

(84) Designated Contracting States:
**DE FR GB**

(30) Priority: **02.06.2000 JP 2000166259**
**26.04.2001 JP 2001128805**

(43) Date of publication of application:
**05.12.2001 Bulletin 2001/49**

(73) Proprietor: **Fuji Photo Film Co., Ltd.**
**Kanagawa (JP)**

(72) Inventors:
• **Hasegawa, Hiroyuki, Fuji Photo Film Co., Ltd.**
**Ashigarakami-gun, Kanagawa (JP)**
• **Isozaki, Hiroyuki, Fuji Photo Film Co., Ltd.**
**Ashigarakami-gun, Kanagawa (JP)**

(74) Representative: **Klunker . Schmitt-Nilson . Hirsch**
**Winzererstrasse 106**
**80797 München (DE)**

(56) References cited:
**US-A- 4 547 656        US-A- 4 585 325**
**US-A- 5 557 385**

## Description

BACKGROUND OF THE INVENTION

1. Field of the Invention

The present invention relates to a method and device for controlling temperature of plural sections, such as a developing tank and a drier of a printer processor. More specifically, the present invention relates to a thermal control method and device for reducing the flicker that is generated by turning on and off heaters of respective sections.

2. Background Arts

A printer processor has a developing tank containing developing solution, a fixing tank containing fixing solution, a washing tank for containing washing solution and a drier. In order to keep temperature condition in development, fixation, washing and drying processes, the printer processor has a thermal control device for monitoring temperature of the developing tank, the fixing tank, the washing tank and the drier, and for turning on and off heaters of these tanks and the drier in accordance with temperature change. Thereby, it is possible to prevent deviation in image quality of a print picture.

In order to control temperature, each of these tanks and the drier is provided with heaters with power consumption of several hundred watts are used. When the heaters are turned on and off, load of the printer processor is largely changed. Thus, the flicker, deviation in output voltage of a power supply, is generated to influence other devices that are connected to the same power supply.

In order to reduce the flicker, Japanese Laid-open patent publication (JP-A) No. 11-133567 discloses a photographic processing device, in which plural heaters are provided in at least one section (processing tanks or drier). In controlling the temperature of the section, the heaters are sequentially turned on at certain intervals, so that the flicker of the heaters is reduced.

Although the above photographic processing device can reduce the flicker of respective sections , it is not possible to decrease flicker effectively when temperatures of plural sections are changed. This is because a plurality of heaters are turned on at the same moment. On the other hand, the flicker may be reduced by turning on and off smaller number of heaters at the same moment. In that case, when a heater of a section with less influence on print image quality is turned on at first, the chance to turn on a heater of a section with more influence on image quality is delayed. Accordingly, it is not possible to control the temperatures of plural sections.

In accordance with the pre-characterizing part of claim 1 and of claim 24, US-A-4,585,325 discloses a thermal control device and a method for controlling temperatures, respectively, wherein this prior art device and method are specifically designed for a heating roll used in a copying machine. There are two heaters, the first heater extending over a middle length portion of said roll, the second heater occupying the two end portions of the roll in the axial direction thereof. So as to obtain a pre-determined temperature profile on the roll surface, the controller supplies a pre-determined current to the middle portion heater. As soon as the difference between the such heated middle portion heater and the end portion's heater is reached (such difference being set to a value between 2 and 10 degrees), the second heater is switched on. During operation, the middle portion heater is maintained at a pre-determined temperature and the end portion's heater is controlled such that a predetermined difference between the end portions of the roll and the middle portion thereof is never exceeded.

SUMMARY OF THE INVENTION

In view of the foregoing, an object of the present invention is to provide a thermal control method and device for carrying out effective thermal control of plural sections with the flicker reduced.

To achieve the above objects, a thermal control device of the present invention is comprised of at least one heater provided in respective plural sections, a power supply for supplying electric power to the heaters, thermo sensors for measuring temperature of the sections, and a controller for controlling temperatures in the plural sections by turning on and off the heaters. The controller determines set ranges and priority orders to respective plural sections, and determines a set number for allowing turned-on state of the heaters at the same time. The controller turns on and off the heaters of sections with higher priority at the same moment up to the set number when temperatures in two or more sections are out of respective set ranges, and turns on and off the heaters of remaining sections with lower priority after a predetermined interval.

The power supply is either a three-phase four-line type or a three-phase three-line type, and the heaters are connected to output terminals of different phases of the power supply when a plurality of the heaters are provided in one section. At least one section is provided with plural heater groups, each of which is consisted of three heaters connected to output terminals of different phases of the power supply. The controller turning on and off all heaters of respective heater groups at the same moment, and turns on and off the heater groups one by one at predetermined intervals.

In the preferred embodiment, plural sections are a developing tank for performing development of an exposed photosensitive material, a fixing tank for performing fixation of developed the photosensitive material, washing tanks for washing the photosensitive material after fixation, and a drier for drying the photosensitive material after washing. The priority order of said developing tank, said drier, said fixing tank and said washing tanks are determined in this order listed.

According to the present invention, since the heaters are turned on and off sequentially at certain intervals in accordance with priority orders of plural sections, it is possible to perform effective thermal control and to reduce the flicker.

BRIEF DESCRIPTION OF THE DRAWINGS

The above and other objects and advantages of the present invention will become apparent from the following detailed description of the preferred embodiments when read in association with the accompanying drawings, which are given by way of illustration only and thus are not limiting the present invention. In the drawings, like reference numerals designate like or corresponding parts throughout the several views, and wherein:

    FIG. 1 is a schematic view of a printer processor having a thermal control device of the present invention;
    FIG. 2 is a schematic sectional view of a developing tank;
    FIG. 3 is a schematic sectional view of a washing tank;
    FIG. 4 is a schematic sectional view of a drier;
    FIG. 5 is a block diagram of the thermal control device;
    FIG. 6 is a time chart of an example of controlling temperature of the drier;
    FIG. 7 is a flow chart showing a sequence of controlling temperature in a heat-up mode;
    FIGS. 8 and 9 are flow charts showing a sequence of heat-up flag set process;

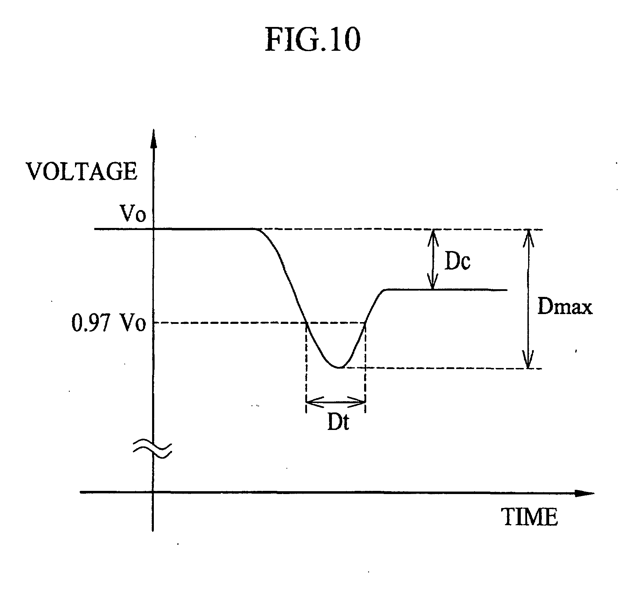

    FIG. 10 is a graph showing deviation in an output voltage of a power supply;
    FIG. 11 is a block diagram of another embodiment of the thermal control device;
    FIG. 12 is a flow chart showing a sequence of another example of controlling temperature in the heat-up mode;
    FIG. 13 is a flow chart showing a sequence of further example of controlling temperature in the heat-up mode; and
    FIGS. 14 and 15 are flow charts showing a sequence of heater driving process.

DETAILED DESCRIPTION OF THE EMBODIMENT

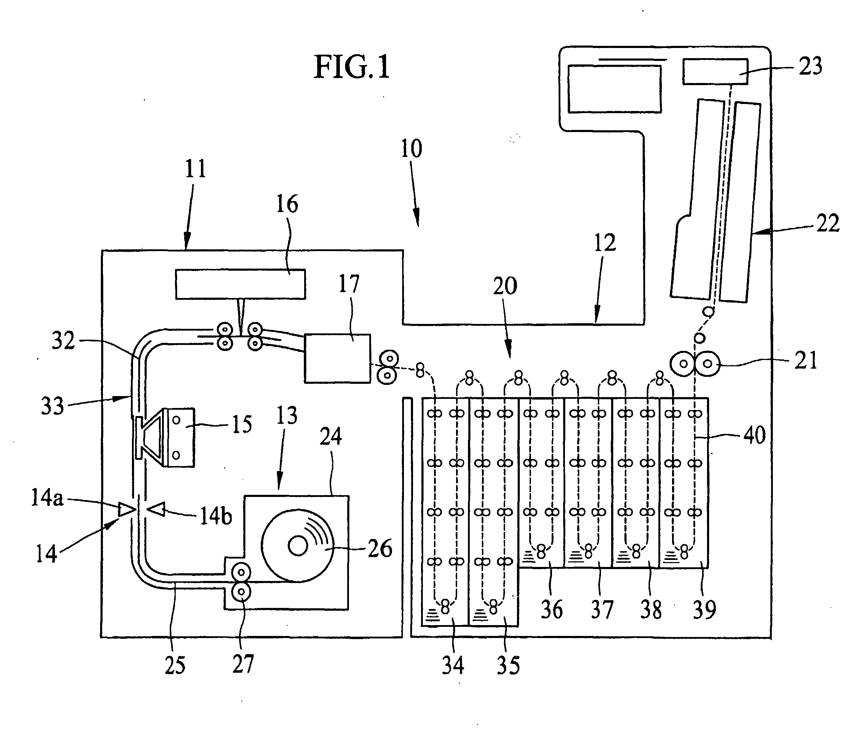

In FIG. 1, a printer processor 10 is comprised of a printer section 11 and a processor section 12 , which are connected to each other. The printer section 11 includes a paper loader 13, a paper cutter 14, a rear side printer 15, an exposure device 16 and a sheet sorter 17.

The processor section 12 includes a development/fixation device 20, a squeeze roller pair 21, a drier 22 and a sheet collection unit 23.

A paper magazine 24 is loaded in the paper loader 13, and includes a photosensitive recording paper 25, which is wound into a paper roll 26. For instance, the photosensitive paper 25 is formed by coating a mixture of a white pigment and a resin including a polyester, on an emulsion-coated surface ( recording surface) of a base sheet. The paper magazine 24 is provided with a feeding roller pair 27, which is driven by a feeding motor (not shown). When the feeding roller set 27 rotates, the photosensitive recording paper 25 is drawn from the paper roll 26, and fed to the rear side printer 15.

The paper cutter 14 includes a fixed blade 14a and a movable blade 14b, which are positioned between the paper loader 13 and the rear side printer 15. When the photosensitive paper 15 is advanced beyond the paper cutter 14 by a predetermined length, the movable blade 14b is moved toward the fixed blade 14a to cut the photosensitive paper 25 to produce a recording sheet 32. The recording sheet 32 is conveyed along a paper guide 33 by a conveyor roller sets (not shown), and forwarded sequentially to a rear side printer 15, the exposure device 16 and the sheet sorter 17.

The rear side printer 15 records necessary information on a rear surface (opposite surface of emulsion-coated surface) of the recording sheet 32. The exposure device 16 has a well-known laser printer, and expose an image on the basis of image data that is stored in an internal image data memory. Exposed recording sheets 32 are arranged in plural rows by the sheet sorter 17, and transferred to the development/fixation device 20.

The development/fixation device 20 is comprised of a developing tank 34, a fixing tank 35, first to fourth washing tanks 36, 37, 38, 39, each of which contains processing solutions. While being conveyed inside the development/fixation device 20 along a passage 40, shown by a dotted line, the recording sheet 32 is subjected to development, fixation and washing processes.

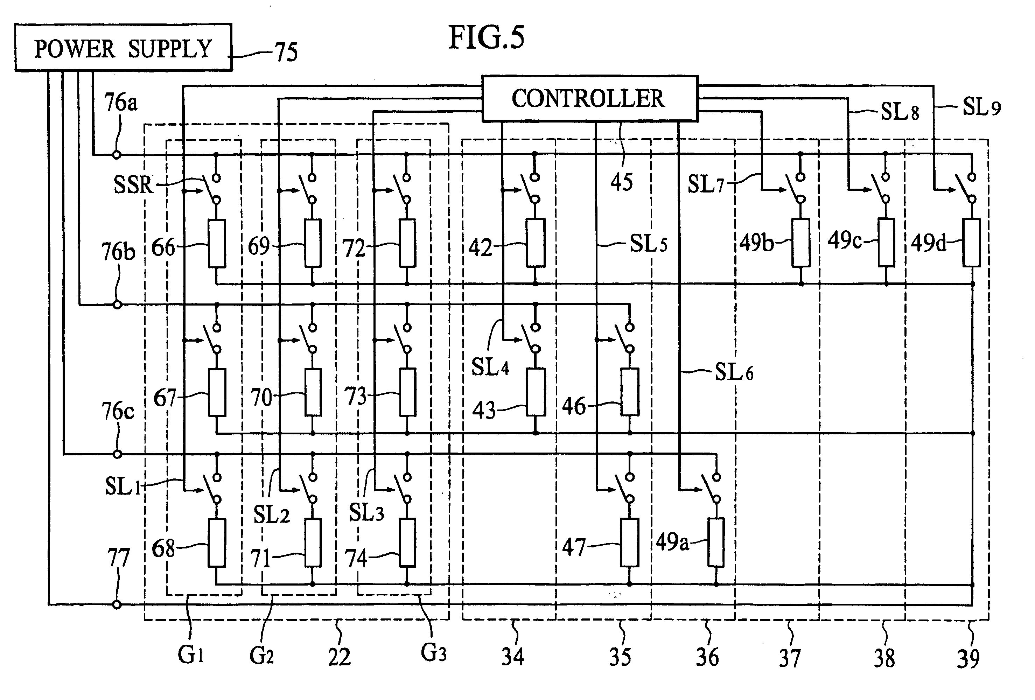

In FIG . 2 , the developing tank 34 is provided with a thermo sensor 41, heaters 42, 43 and plural roller pairs 30 for conveying the recording sheet 32. The thermo sensor 41 and the heaters 42, 43 are connected with a controller 45. Developing solution 44 is filled up in the developing tank 34. The thermo sensor 41 usually monitors the temperature in the developing solution 44, and sends temperature information signals to the controller 45 at every second. The heaters 42, 43 are connected to a power supply 75 (see FIG. 5) via solid state relays (SSR), which will be mentioned below. The controller 45 sends changeover signals to the SSRs, to turn on and off the heaters 42, 43 on the basis of temperature information so as to keep the temperature in the developing solution 44 within a set range. The fixing tank 35 has the same configuration as the developing tank 34, and is provided with heaters 46, 47 (see FIG. 5) of the same power consumption as those in the developing tank 34. Fixing solution is filled up in the fixing tank 35.

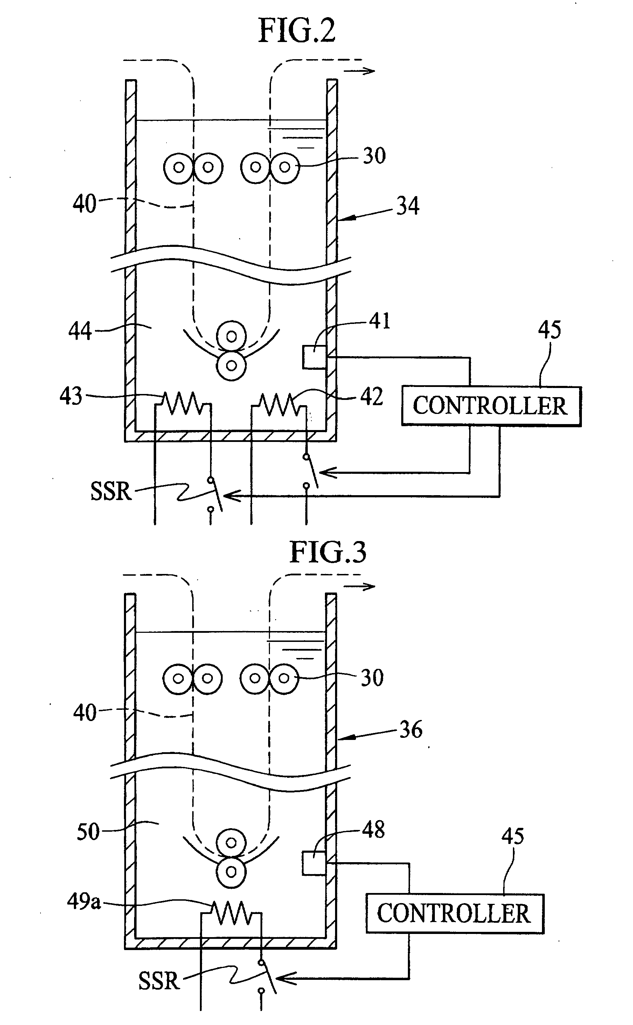

In FIG. 3, the first washing tank 36 is provided with a thermo sensor 48, a heater 49a and plural roller sets 30 for conveying the recording sheet 32. Washing solution 50 is filled up in the first washing tank 36 for washing the fixing solution on the recording sheet 32 off. The heater 49a has the same power consumption as the heaters 42, 43 of the developing tank 34, and is connected to the power supply 75 via the SSR. The heater 49a and the thermo sensor 48 are connected to the controller 45. The controller 45 turns on and off the heater 49a by transferring changeover signal to the SSR.

The second to fourth washing tanks 37, 38, 39 are provided with heaters 49b, 49c, 49d respectively. Each of the heaters 49b to 49d has the same power consumption as the heater 49a of the first washing tank 36, and connected to the controller 45 together with thermo sensors (not shown). After development and fixation, the recording sheet 32 is passed through the first to fourth washing tanks 36 to 39 in numerical order. Thus, purity of washing solution in the washing tanks is increased in numerical order. In order to keep the purity of washing solution high, washing solution is supplemented into the fourth washing tank 39. And the washing tanks are designed such that surplus of washing solution is sequentially poured into the third, second and first washing tanks 38, 37, 36 in this order listed.

After passing through the washing tanks 36 to 39, the recording sheet 32 is nipped by the squeeze roller pair 21. While the recording sheet 32 is conveyed by the squeeze roller pair 21, washing solution is wrung out from both surfaces of the recording sheet 32, and poured into the fourth washing tank 39.

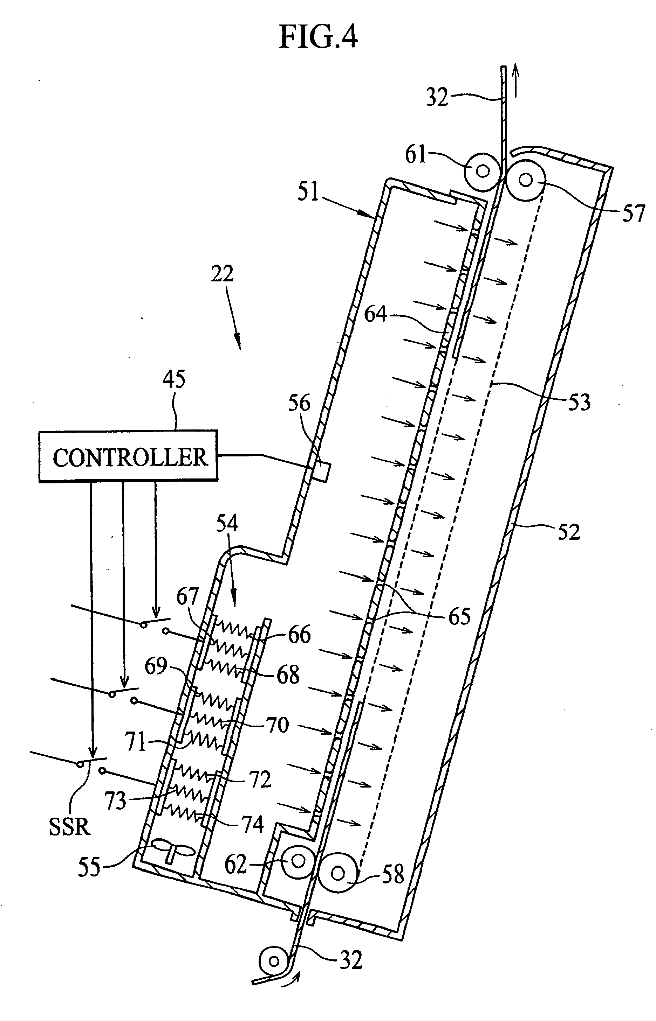

After the squeeze roller pair 21, the recording sheet 32 is transferred to the drier 22 for drying both surfaces of the recording sheet 32 completely. In Fig. 4, the drier 22 includes a blower case 51, an absorption case 52, an endless belt 53, a heater unit 54, a blower and a thermo sensor 56. The endless belt 53 is strained by a pair of belt rollers 57, 58 that are positioned in a top and a bottom end of the absorption case 52. The endless belt 53 is a polyester mesh belt, and is coated with a silicon rubber to prevent slipping of the recording sheet 32. At first, the recording sheet 32 is conveyed upward by the lower belt roller 58 and a retaining roller 62. Then, the endless belt 53 rotates in the clockwise direction by a motor (not shown), to convey the recording sheet 32 upward. Afterwards, the recording sheet 32 is nipped by a retaining roller 61 and the upper belt roller 57, and is advanced toward the sheet collection unit 23.

The blower case 51 is constituted by a box-shaped case body 63 and a ventilation plate 64. The ventilation plate 64 is faced closely to the conveying surface of the endless belt 53. A plurality of slits 65 are formed through the ventilation plate 64 at certain intervals in the feeding direction of the recording sheet 32, so drying air through the slits 65 is uniformly blown to the emulsion-coated surface of the recording sheet 32.

The heater unit 54 is disposed inside of the blower case 51, and is consisted of nine heaters 66 to 74 with same capacities. These heaters 66 to 74 are divided by three, to constitute three heater groups G1, G2 and G3, which are connected to the controller 45. The blower 55 is below the heater unit 54, and is usually rotated to generate an air current, which passes through the heater unit 54 and blows to the ventilator plate 64 as a hot and dry air. The air current from the blower case 51 enters the absorption case 52 through the mesh endless belt 53, and is circulated into the blower case 51 through both end portion of the absorption case 52 with respect to a width direction perpendicular to the feeding direction of the recording sheet 32.

FIG. 5 shows a circuitry diagram of the thermal control device of the present invention. The thermal control device is comprised of heaters 42, 43, 46, 47, 49a to 49d, 66 to 74, thermo sensors, a power supply 75 and the controller 45. The power supply 75 is three-phase four-line system, and supplies electric power to heat respective heaters 42, 43, 46, 47, 49a to 49d, 66 to 74. The controller 45 performs on-off control of respective heaters 42, 43, 46, 47, 49a to 49d, 66 to 74.

The controller 45 usually monitors temperature information from thermo sensors of the drier 22 and processing tanks 34 to 39. When the controller 45 detects deviation in temperature of each section (the drier 22 and respective processing tanks 34 to 39) from respective set ranges, the controller 45 generates a changeover signal to turn on or off the corresponding heater. The set ranges of these sections (the drier 22 and respective processing tanks 34 to 39) are predetermined. The controller may generate a changeover signal when detecting deviation in temperature from a set value.

Each of the heaters 42, 43, 46, 47, 49a to 49d, 66 to 74 is connected to the solid state relay of zero-cross control type (SSR). The solid state relays are driven by receiving changeover signals from the controller 45 through lines SL1 to SL9, and are turned on and off at the moment when applied voltages of the corresponding heater becomes zero. So, noise and surge voltage are decreased. Since the measurement of the temperature in each section is carried out at every second, the controller 45 also performs on-off control at every second.

One terminals of the three heaters 66, 67, 68 for comprising the first heater group G1 are connected to output terminals 76a, 76b, 76c of different phases of the power supply 75 respectively. The other terminals of the heaters 66, 67, 68 are connected to a neutral terminal (neutral point) 77 through the solid state relays. The solid state relays of the heaters 66, 67, 68 are connected to the controller 45 through the same line SL1, the changeover signal from the controller 45 causes the three heaters 66, 67, 68 to be turned on or off approximately at the same moment (within a period of 200 ms). The voltage applied to the heaters 66 , 67 , 68 are not in phase, but different in phase angle from one another by 120 degrees. Thus, when the three heaters 66, 67, 68 are turned on or off, currents to conduct the neutral terminal 77 are canceled. Since deviation in the current to conduct the neutral terminal 77 is smaller than that in the conventional system to activate the heaters respectively, it is possible to reduce the flicker. The second and third heater groups G2, G3 have the same configurations as the first heater group G1.

Load of the heaters is rapidly changed when all heater groups G1, G2, G3 are turned on and off at the same moment, which increases the flicker. In order to prevent this, the heater groups G1, G2, G3 have the orders of priority. In this embodiment, the first heater group G1 has the highest priority among the three, and the third heater group G3 has the lowest one. The controller 45 performs on-off control of the heater groups G1, G2 , G3 such that the turn-on time of the f irst heater group G1 (the highest-priority heater group) is the longest among the three heater groups.

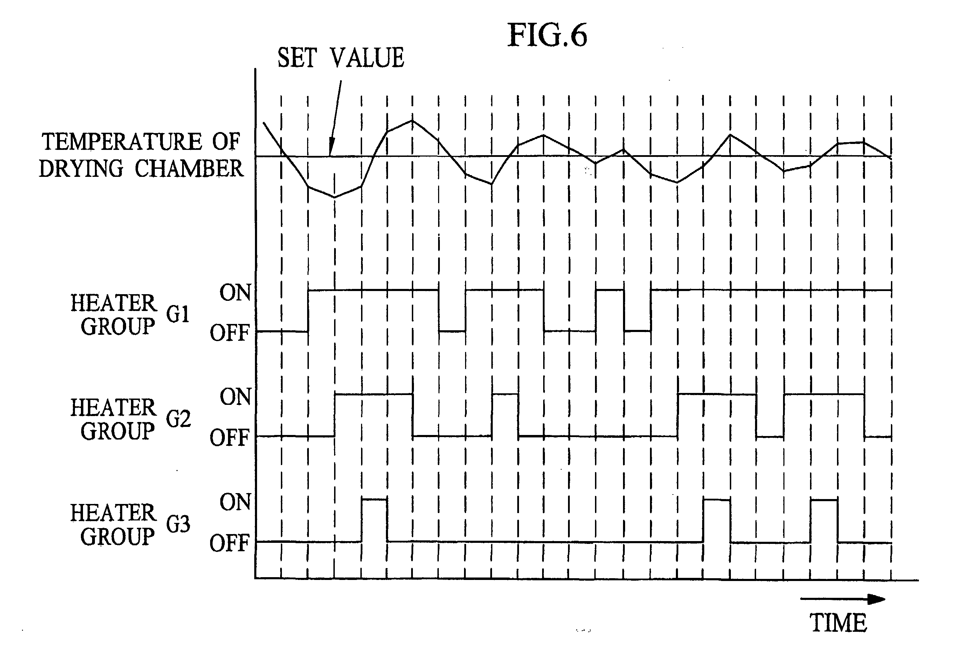

FIG. 6 shows an example of temperature control of the drier 22. When the temperature in the drier 22 becomes lower than a set value, the controller 45 turns on the first heater group G1 first of all. Then, the second and third heater groups G2, G3 are sequentially turned on in this order at the succeeding sampling times. When the temperature in the drier 22 becomes higher than the set value, the controller 45 turns off the third heater group G3, the lowest priority group. Then, the second and first heater groups G2, G1 are successively turned off in this order. By turning on and off the heater groups in this way, it is possible to prevent rapid load change. In this embodiment, the heater groups are turned on and off when the temperature in the drier 22 is reached up to the set value, but the present invention is not limited to this. The heater groups may be turned on when the temperature in the drier 22 is less than a set range, and the heater groups may be turned off when the temperature is equal to or more than the set range.

One terminals of the heaters 42 , 43 of the developing tank 34 is connected to output terminals 76a, 76b of different phases of the power supply 75. The other terminals are connected to the neutral terminal 77. The heaters 42 , 43 are connected to the controller 45 via the same line SL4 , and controlled to be turned on and off approximately at the same moment (within a period of 200 ms). Since applied voltages to the heaters 42, 43 are different in phase by 120 degrees, deviation in the current to flow through the neutral terminal 77 is smaller than that in turning on and off the heaters at the different moments. Compared to the case to turn on the heaters 42 , 43 separately, the flicker of the system is reduced by turning on and off these heaters 42, 43 concurrently.

One terminals of the heaters 46, 47 of the fixing tank 35 is connected to output terminals 76b, 76c of different phases of the power supply 75. The other terminals are connected to the neutral terminal 77. In order to decrease the flicker, the heaters 46, 47 are controlled to be turned on and off approximately at the same moment, in the way as controlling the temperature in the developing tank 34.

The heaters 49b to 49d of the second to fourth washing tanks 37 to 39 are connected to the same output terminal 76a. On the other hand, the heater 49a of the first washing tank 36 is connected to the output terminal 76c, which is different in phase from the output terminal 76a. These three heaters 49b to 49d are controlled by the controller 45 such that more than two heaters are not turned on and off at the same moment. The controller 45 may turn on one heater and turn off another heater at the same moment , since variations in the current to conduct the neutral terminal 77 are canceled. The heater 49a of the first washing tank 36 is connected to the output terminal 76a, which is not connected to the other heaters 49b to 49d. Thus, the heater 49a of the first washing tank 36 is possible to be turned on and off together with one of the other heaters 49b to 49d at the same moment. Thereby, it is possible to carry out effective thermal control of the washing tanks 36 to 39 with the flicker reduced.

Temperature change of the developing tank 34 has a greatest influence on a print picture than that of the drier 22 and other tanks 35 to 39. Thus, it is necessary to execute strict thermal control of the developing tank 34. In addition, the temperature of the dried air in the drier 22 is easily fluctuated, so thermal control of the drier 22 is required to be stricter than that of the fixing tank 35 and the washing tanks 36 to 39. Accordingly, respective sections (processing tanks 34 to 39 and the drier 22) has a priority order. In case of turning on and off more than two sections, the controller 45 performs temperature control of the section with higher priority. In this embodiment, priority orders are determined by the controller 45 in the following order from the highest one, the developing tank 34, the drier 22, the fixing tank 35, the fourth washing tank 39, the third washing tank 38, the second washing tank 37, the first washing tank 36. In consideration of an allowable electricity of the power supply 75, it is prohibited to turn on and off more than three heaters at the same moment in each phase, except the above mentioned cases.

The controller 45 has a heat-up mode and a temperature control mode. In the heat-up mode, the controller 45 turns on the heaters until respective temperatures in processing tanks 34 to 39 reaches respective set ranges. In the temperature control mode, the controller 45 turns on and off the heaters so as to keep the temperature in respective sections within respective set ranges. Moreover, in the temperature control mode, the controllers 45 controls the heaters such that more than eight heaters are not in turn-on state at the same time, to prevent the entire power consumption from exceeding a capacity of the power supply 75. But in controlling the temperature of the drier 22 , all heater groups G1 to G3 may be turned on.

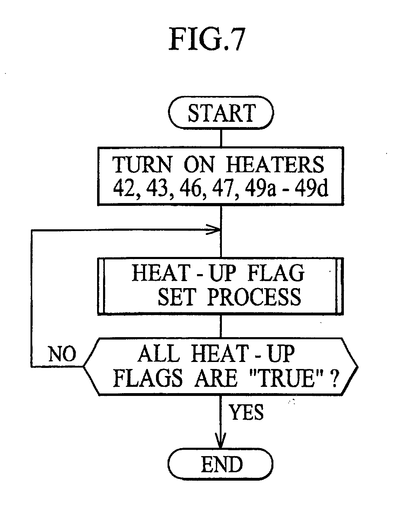

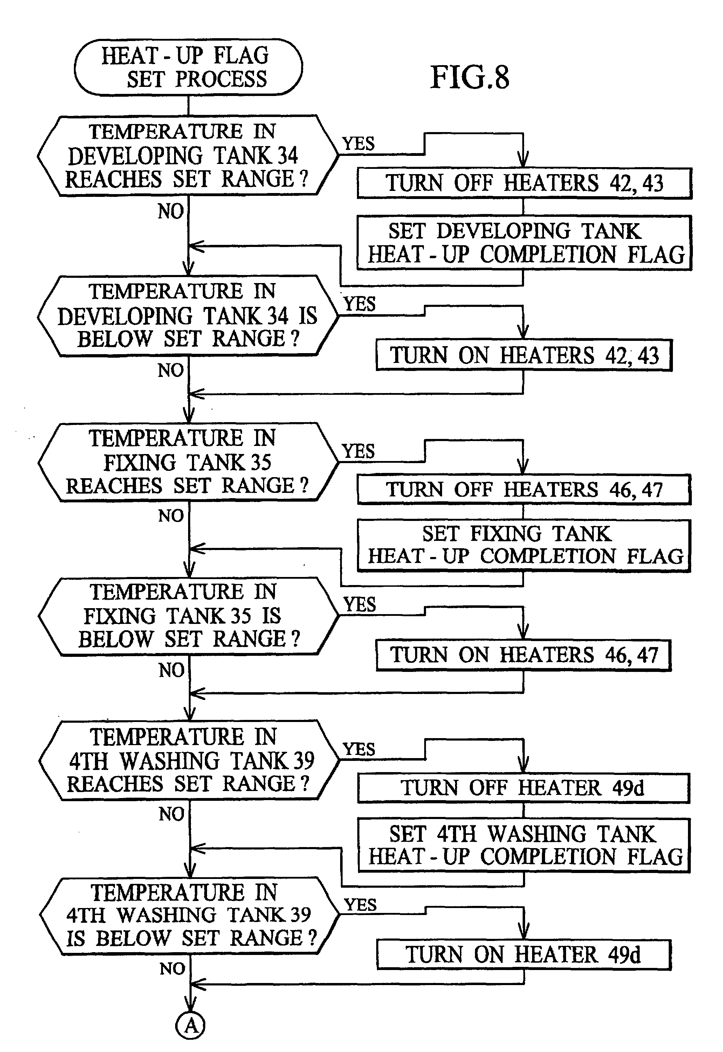

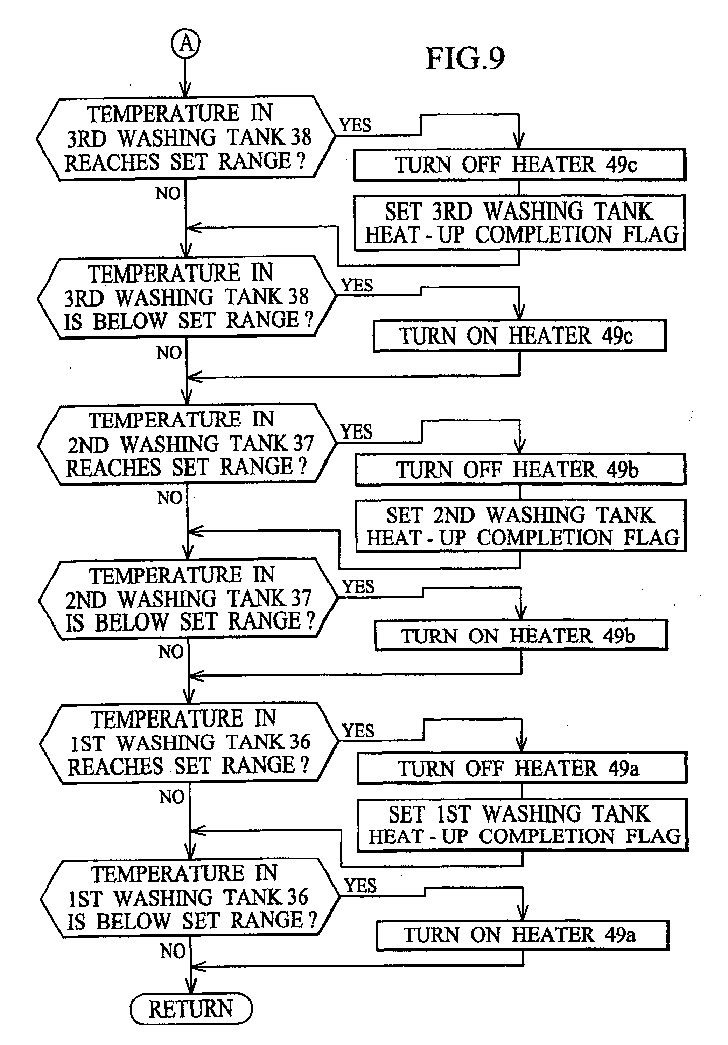

FIGS. 7 to 9 shows flow charts of a sequence in the heat-up mode. First, the controller 45 turns on heaters 42, 43, 46, 47, 49a to 49d of all processing tanks 34 to 39. Afterwards, the controller 45 executes a heat-up flag set process, in which the controller 45 monitors the temperature in the developing tank 34, and turns off the heaters 42 , 43 when the temperature in the developing tank 34 reaches a set range. Moreover, the controller 45 sets a developing tank heat-up completion flag to "true". The heat-up completion flags of respective processing tanks are stored in an internal memory of the controller 45. Then, the controller 45 judges whether or not the temperature of the developing tank 34 is below the set range, and turns on the heaters 42 , 43 again when the temperature in the developing tank 34 is below the set range.

The controller 45 performs the above processes to the fixing tank 35, the fourth washing tank 39, the third washing tank 38, the second washing tank 37 and the first washing tank 36, in this order listed. When the temperature in respective processing tanks are over the lower limit of respective set ranges, the controller 45 sets the heat-up completion flag of the respective processing tanks to "true". When all heat-up completion flags are not "true" after the heat-up flag set process, the controller 45 performs the above process again. On the other hand, when the all heat-up completion flags are "true", the controller 45 judges that the temperature of respective processing tanks is within respective set ranges, and is changed into the temperature control mode. In the heat-up mode, since the temperature in the drier 22 is rapidly increased, the heaters 66 to 74 of the drier 22 are turned off.

In the temperature control mode, when the temperatures in the developing tank 34, fixing tank 35 and the fourth washing tank 39 are below the respective set ranges, for example, the controller 45 selects as many heaters as possible unless more than eight heaters are not in turn-on state at the same time, and unless more than three heaters are not turned on concurrently in respective phases. And the controller 45 turns on and off the selected heaters. When heaters in high-priority sections, such as heater groups G1 to G3 in the drier 22, are already turned on, it is not possible to turn on the heater of the low-priority sections, such as the fixing tank 34 and the fourth washing tank 39. In that case, the controller 45 first turns on the heaters of the developing tank 34 with the highest priority. When other heaters are turned off after a short while, the controller 45 turns on the heaters of the fixing tank 35 and the fourth washing tank 39, which have lower priorities than the developing tank 34.

Next, operation of the above configuration will be described. When the printer processor 10 is powered, the controller 45 is driven in the heat-up mode. Heaters 42 , 43, 46, 47, 49a to 49d of all processing tanks 34 to 39 are turned on, and heated until the temperature of respective processing tanks 34 to 39 reaches the lower limit of respective set ranges. When temperatures of all processing tanks 34 to 39 are reached to the predetermined ranges, the controller 45 is driven in the temperature control mode, in which heaters of respective processing tanks 34 to 39 are controlled such that the temperature in respective tanks 34 to 39 is within respective set ranges. The printer processor 10 may have a timer to set an ON time to power the printer processor 10. In that case, by setting the ON time so as to complete the heat-up process before an operator starts print operation, the operator can carry out print operation at once without waiting the completion of the heat-up process. Thereby, it is possible to carry out efficient operation.

In the temperature control mode, the controller 45 monitors the temperatures of the respective sections (the drier 22 and processing tanks 34 to 39). Upon detecting that the temperature in one section is out of the set range, the controller 45 turns on and off the corresponding heater to keep the temperature within the set range. When temperatures of two or more sections become lower than respective set ranges, for instance, the controller 45 selects the heaters in a high-priority section, and turns on the selected heaters. Thereby, it is possible to execute effective thermal control, since the controller 45 can properly control the temperature of the section with higher influence on a print picture.

In controlling the temperature in the drier 22, the controller 45 concurrently turns on and off three heaters of a heater group that are connected to output terminals 76a to 76c of the three-phase four-line power supply 75. Since deviations in currents to conduct the neutral terminal 77 is canceled out, it is possible to reduce the flicker. Moreover, the heaters of the drier 22 are divided into three heater groups G1 to G3 , which are controlled such that two or more heater groups are not turned on at the same moment. Thereby, fluctuation of the current to conduct respective output terminals 76a to 76c are decreased, so the flicker is reduced.

In Europe, an international standard (IEC61000-3-3) is mandatory requirement, which specifies to comply with the following requirement:

$$Dc \leq 0.03 \times Vo$$

$$Dmax \leq 0.04 \times Vo$$

$$Dt \leq 200 \text{ ms}$$

wherein Dc represents a relative steady state voltage change, Dmax a maximum relative voltage change, Vo a steady state voltage, and Dt represents a relative voltage change characteristic. Moreover, this standard also specifies to comply with the following requirement:

$$Pst \leq 1.0$$

$$Plt \leq 0.65$$

wherein Pst represents a short term flicker severity, evaluated over a short term (10 minutes), and Plt represents a long term flicker indicator, evaluated over a long term (2 hours). This embodiment applies to the power supply 75 including 16 amps. per phase (line) and 220 V to 240 V line to neutral. Also in this embodiment, each of the heaters 66 to 74 of the drier 22 has a power consumption of 444 W, and each of the heaters 42, 43, 46, 47, 49a to 49d of the respective tanks 34 to 39 has a power consumption of 500 W. The sampling time of the respective thermo sensors are set to 1 second. The temperature ranges of the developing tank 34, the fixing tank 35 and the washing tanks 36 to 39 are determined to be 38.5±0.3 $°C$, 38.0 ± 2.0 $°C$ and 37.5 ± 2.5 $°C$, respectively. When a test is performed under the above described condition, all requirements of the above standard are satisfied. Accordingly, it is possible to provide a thermal control device to satisfy the limitation of voltage fluctuation and flicker in Europe.

In the above embodiment, each of the developing tank 34 and the fixing tank 35 have two heaters, but these tanks may be provided with three heaters, which are connected to different output terminals of the power supply 75. It is also possible to provide more than three heaters with these tanks 34, 35, and to turn on three heaters of the different phases at the same moment. The sampling time of the thermo sensors is not restricted to 1 second, and may be changed unless it is equal to or less than 200 ms.

In the above embodiment, the controller 45 controls the heaters such that more than nine heaters are not in turn-on state at the same time, and such that more than three heaters are not allowed to be turned on or off concurrently in each phase. But these numbers may be changed in accordance with power consumption of the heaters to be turned on or off, and with allowable electricity of the power supply 75. For instance, it is possible to turn on and off more than three heaters at the same time unless power consumptions of these heaters exceeds the allowable electricity. That is, if an amount of power consumptions of the heaters in the high-priority sections and a small heater with small power consumption in the low-priority sections do not exceed the allowable electricity of the power supply 75, the controller 45 may concurrently turn on and off the small heater and the heaters in the high-priority sections.

The priority order for turning on and off the heaters is not limited to the above embodiment, and may be determined according to the characteristic of the development/fixation device 20. It is possible to simultaneously turn on and off more than two heaters that are connected to the same output terminal of the power supply 75, unless an amount of power consumptions of the heaters in turn-on state exceeds the capacity of the power supply 75.

In the above embodiment, the heater groups G1 to G3 of the drier 22 have priority orders, but it is possible to remove the priority order by controlling the heater groups to turn on and off one by one at a certain period of time. It is also possible to turn on two or more heater groups at the same moment, unless an amount of power consumptions of the heaters in turn-on state exceeds the flicker standard.

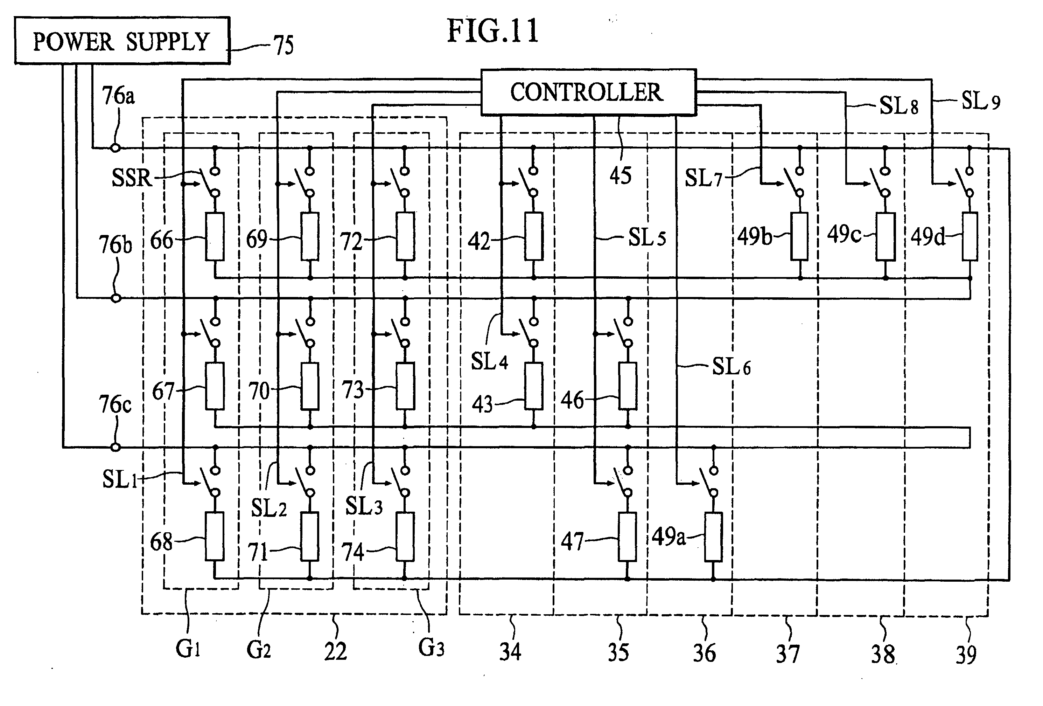

It is possible to provide with a three-phase three-lines type power supply, as shown in FIG. 11. Moreover, a power supply of single-phase type is also applicable.

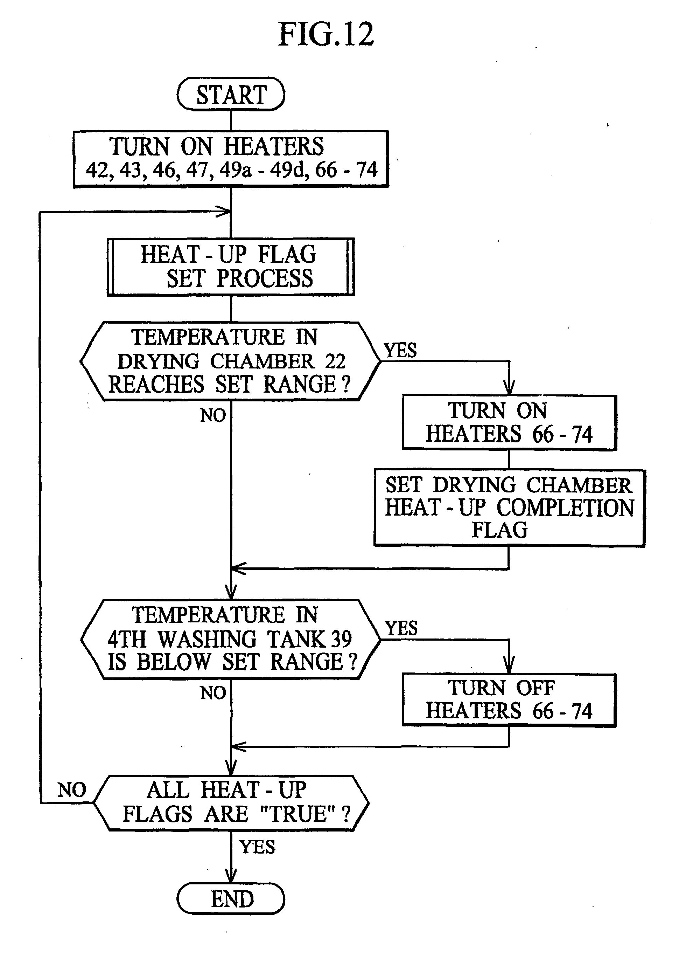

In the above embodiment, all of the processing tanks 34 to 39 are concurrently heated in the heat-up mode, but other ways are applicable. In FIG. 12, the heaters 66 to 74 of the drier 22 as well as other heaters 42, 43, 46, 47, 49a to 49d are turned on at the same time. After the heat-up flag set process, the controller 45 monitors the temperature in the drier 22. When the temperature in the drier 22 is beyond the lower limit of the set range, the controller 45 turns off the heaters 66 to 74, and set the drier heat-up completion flag to "true". On the other hand, when the temperature in the drier 22 becomes lower than the set range, the controller 45 turns on the heaters 66 to 74 again. If all of the heat-up completion flags are "true", the heat-up operation is finished.

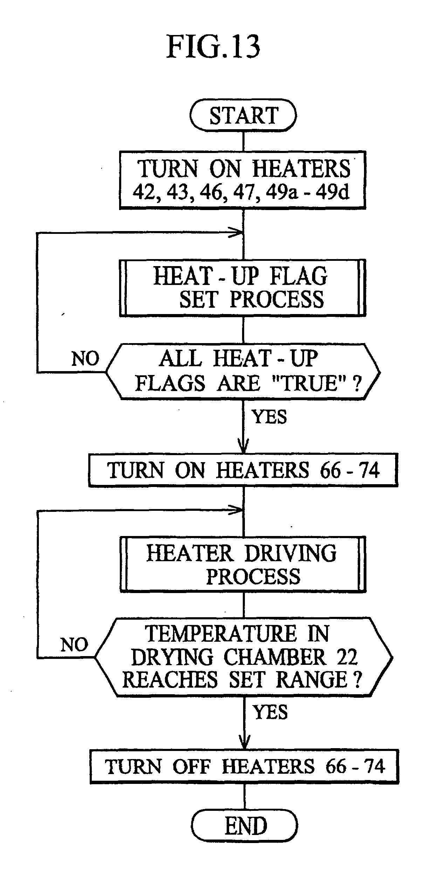

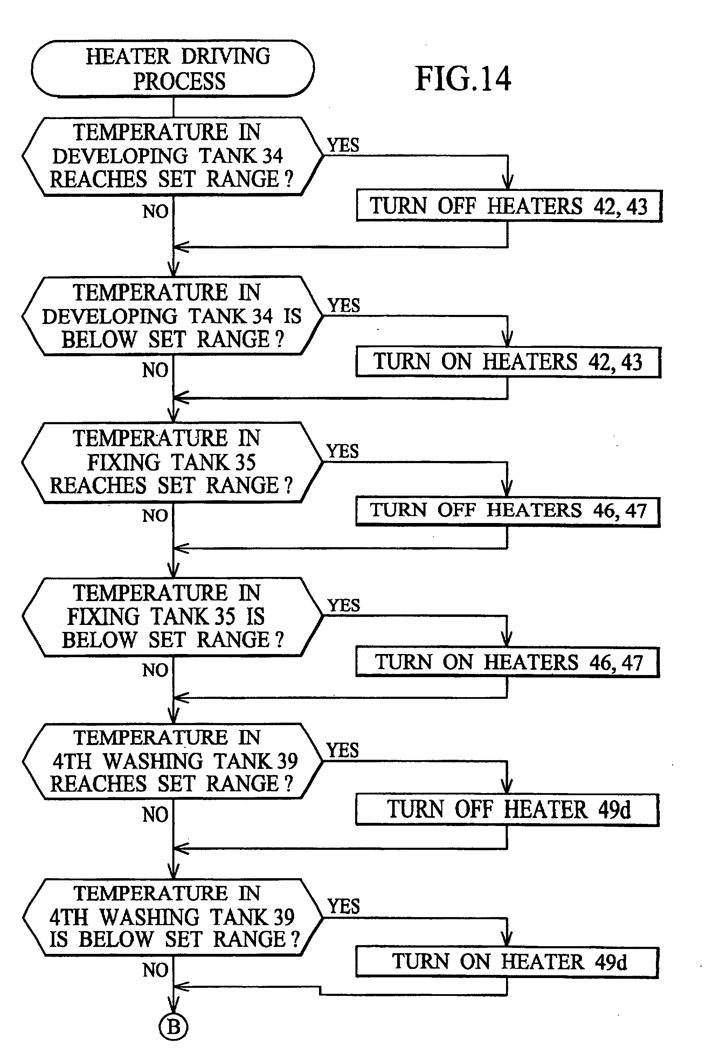

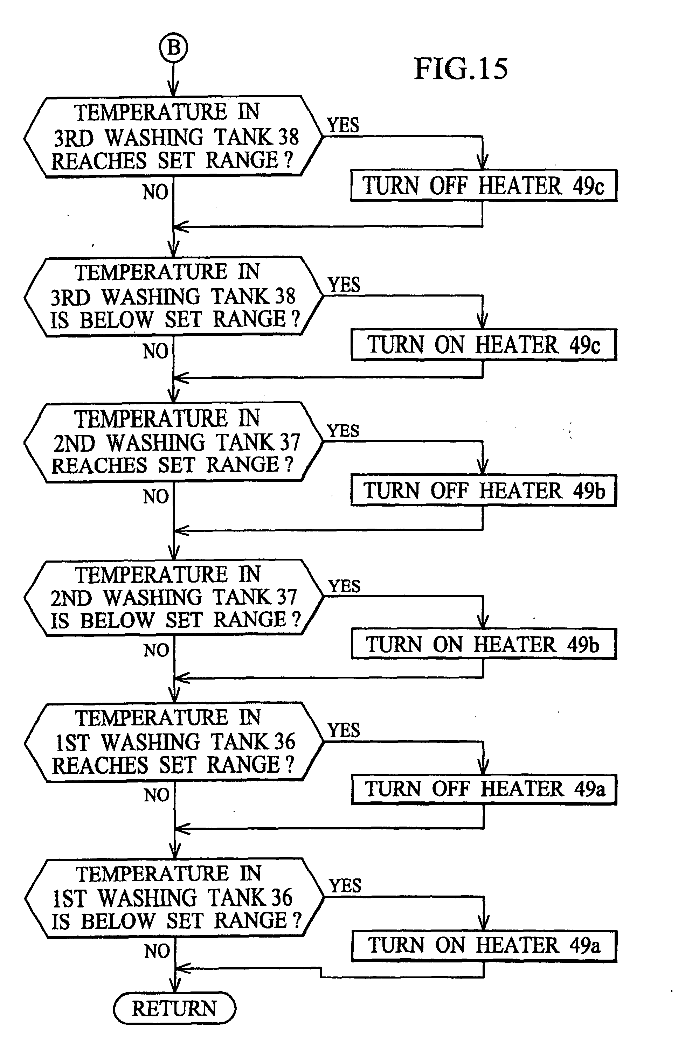

FIGS. 13 to 15 shows an another example of the heat-up operation. After the respective tanks 34 to 39 are heated, the controller 45 turns on the heaters 66 to 74 of the drier 22. While heating up the drier 22, the controller 45 controls the temperatures in the processing tanks 34 to 39 so as not to beyond the respective set ranges. Upon detecting the temperature in the drier 22 to be reached up to the set range, the controller 45 turns off the heaters 66 to 74 to complete the operation in the heat-up mode. It is also possible to heat the drier 22 before heating up the processing tanks 34 to 39.

It is possible to determine a heat-up temperature range, different from the predetermined range. When the temperature in the processing tanks 34 to 39 are beyond the lower limit of the heat-up temperature range, the controller 45 turns off the heater, and shifts to the temperature control mode. In the temperature control mode, the controller 45 turns on and off the heaters such that the temperature in respective sections is within the respective set ranges.

The present invention is not limited to the printer processor, and is applicable to control a temperature of a photosensitive materials like emulsion that is contained in a tank.

Thus, the present invention is not to be limited to the above embodiments, but on the contrary, various modifications are possible to those skilled in the art without departing from the scope of claims appended hereto.

**Claims**

1. A thermal control device for controlling temperatures in plural sections (22, 34, 35, 36, 37, 38, 39), comprising:

   at least one heater (42, 43, 46, 47, 49a to 49d, 66 to 74) provided in respective said plural sections (22, 34, 35, 36, 37, 38, 39);
   a power supply (75) for supplying electric power to said heaters, said power supply (75) determining an allowable electricity for allowing said heaters (42, 43, 46, 47, 49a to 49d, 66 to 74) to be turned on and off at the same moment;
   thermo sensors (41, 48, 56) for measuring temperature in said sections (22, 34, 35, 36, 37, 38, 39), each of said plural sections (22, 34, 35, 36, 37, 38, 39) having said thermo sensor (41, 48, 56); and
   a controller (45) for controlling temperatures in said plural sections (22, 34, 35, 36, 37, 38, 39) by turning on and off said heaters (42, 43, 46, 47, 49a to 49d, 66 to 74), said controller (45) being connected to said heaters (42, 43, 46, 47, 49a to 49d, 66 to 74) and said thermo sensors (41, 48, 56), said controller (45) determining set ranges and priority orders to respective said plural sections (22, 34, 35, 36, 37, 38, 39), **characterized in that** said controller selects said heaters (42, 43, 46, 47, 49a to 49d, 66 to 74) to be turned on and off sequentially from sections (22, 34, 35, 36, 37, 38, 39) with higher priority until an amount of power consumptions of selected heaters (42, 43, 46, 47, 49a to 49d, 66 to 74) reaches up to said allowable electricity when temperatures in two or more sections (22, 34, 35, 36, 37, 38, 39) are out of respective said set ranges, turns on and off said selected heaters (42, 43, 46, 47, 49a to 49d, 66 to 74) at the same moment, and turns on and off said heaters (42, 43, 46, 47, 49a to 49d, 66 to 74) of remaining sections (22, 34, 35, 36, 37, 38, 39) with lower priority after a predetermined interval.

2. A device as claimed in claim 1, wherein said controller (45) turns on and off heaters (42, 43, 46, 47, 49a to 49d, 66 to 74) in accordance with temperature information of respective sections (22, 34, 35, 36, 37, 38, 39) from said thermo sensors (41, 48, 56) at said predetermined intervals.

3. A device as claimed in claim 2, wherein said controller (45) turns on and off a small heater in said sections (22, 34, 35, 36, 37, 38, 39) with lower priority and said selected heaters (42, 43, 46, 47, 49a to 49d, 66 to 74) at the same moment if an amount of power consumptions of said selected heaters (42, 43, 46, 47, 49a to 49d, 66 to 74) and said small heater do not exceed said allowable electricity of said power supply (75).

4. A device as claimed in claim 2, wherein said power supply (75) is either a three-phase four-line type or a three-phase three-line type, said heaters (42, 43, 46, 47, 49a to 49d, 66 to 74) being connected to output terminals (76a, 76b, 76c) of different phases of said power supply (75) when a plurality of said heaters (42, 43, 46, 47, 49a to 49d, 66 to 74) are provided in one said section (22, 34, 35, 36, 37, 38, 39).

5. A device as claimed in claim 4, wherein at least one of said plural sections (22) is provided with at least one heater groups (G1, G2, G3) each of which is consisted of three said heaters (66 to 74) connected to output terminals (76a, 76b, 76c) of different phases of said power supply (75), said controller (45) turning on and off all heaters (66 to 74) of respective said heater groups (G1, G2, G3) at the same moment.

6. A device as claimed in claim 5, wherein at least one of said plural sections (22) is provided with plural said heater groups (G1, G2, G3), said controller (45) determining priority orders to said heater groups (G1, G2, G3), and turning on and off said heaters (66 to 74) sequentially from said heater groups (G1, G2, G3) with higher priority.

7. A device as claimed in claim 5, wherein at least one of said plural sections (22) is provided with plural said heater groups (G1, G2, G3), said controller (45) turning on and off said heater groups (G1, G2, G3) one by one at said predetermined intervals.

8. A device as claimed in claim 6, wherein said controller (45) turns on and off said heaters (42, 43, 46, 47, 49a to 49d, 66 to 74) within a period of 200 ms when turning on and off said heaters (42, 43, 46, 47, 49a to 49d, 66 to 74) at the same moment, and wherein said controller turns on and off said heaters (42, 43, 46, 47, 49a to 49d, 66 to 74) after 200 ms has passed since turning on and off said heaters (42, 43, 46, 47, 49a to 49d, 66 to 74) with higher priority when turning on and off said heaters (42, 43, 46, 47, 49a to 49d, 66 to 74) after said predetermined interval.

9. A device as claimed in claim 8, wherein said plural sections (22, 34, 35, 36, 37, 38, 39) are a developing tank (34) for performing development of an exposed photosensitive material (32), a fixing tank (35) for performing fixation of developed said photosensitive material (32), washing tanks (36 to 39) for washing said photosensitive material (32) after fixation, and a drier (22) for drying said photosensitive material (32) after washing;

wherein said controller (45) determines said priority order of said developing tank (34), said drier (22), said fixing tank (35) and said washing tanks (36 to 39) in this order listed.

10. A device as claimed in claim 9 , wherein said controller (45) turns on and off said heaters (42, 43, 46, 47, 49a to 49d, 66 to 74) within a period of 200 ms when turning on and off said heaters (42, 43, 46, 47, 49a to 49d, 66 to 74) at the same moment, and wherein said controller turns on and off said heaters (42, 43, 46, 47, 49a to 49d, 66 to 74) after 200 ms has passed since turning on and off said heaters (42, 43, 46, 47, 49a to 49d, 66 to 74) with higher priority when turning on and off said heaters (42, 43, 46, 47, 49a to 49d, 66 to 74) after said predetermined interval.

11. A device as claimed in claim 10 , wherein said plural sections (22, 34, 35, 36 , 37, 38, 39) are a developing tank (34) for performing development of an exposed photosensitive material (32), a fixing tank (35) for performing fixation of developed said photosensitive material (32), washing tanks (36 to 39) for washing said photosensitive material (32) after fixation, and a drier (22) for drying said photosensitive material (32) after washing;

wherein said controller (45) determines said priority order of said developing tank (34), said drier (22), said fixing tank (35) and said washing tanks (36 to 39) in this order listed.

12. A device as claimed in claim 11, wherein said power supply (75) is either a three-phase four-line type or a three-phase three-line type.

13. A device as claimed in claim 12, wherein said drier (22) has plural heater groups (G1, G2 , G3), said heater group (G1, G2, G3) being consisted of three said heaters (66 to 74) connected to output terminals (76a, 76b, 76c) of different phases of said power supply (75), said controller (45) turning on and off all heaters ( 66 to 74) of respective said heater groups (G1, G2, G3) at the same moment.

14. A device as claimed in claim 13, wherein said controller (45) turns on said heater groups (G1, G2, G3) one by one at said predetermined intervals when temperature in said drier (22) is below a set range of said drier (22), and wherein said controller (45) turns off said heater groups (G1, G2, G3) one by one at said predetermined intervals when temperature in said drier (22) reaches said set range of said drier (22).

15. A device as claimed in claim 14, wherein each of said developing tank (34) and said fixing tank (35) has plural heaters (42, 43, 46 , 47) for comprising a in-tank heater group, said heaters of said in-tank heater group being connected to output terminals (76a, 76b, 76c) of different phases of said power supply (75), said controller (45) turning on said heaters (42, 43, 46 , 47) of in-tank heater group at the same moment when temperature in said developing tank (34) or said fixing tank (35) is below a set range of respective tanks (34, 35), and said controller turning off said heaters of in-tank heater group at the same moment when temperature in said developing tank (34) or said fixing tank (35) reaches said set range of respective tanks (34, 35).

16. A device as claimed in claim 15, wherein said washing tanks (36 to 39) includes first (36), second (37), third (38) and fourth (39) washing tanks, said photosensitive material (32) being conveyed to said drier (22) through said first (36), second (37), third (38) and fourth (39) washing tanks in this order, said controller (45) determining said priority orders to said forth (39), third (38), second (37) and first (36) washing tanks in this order.

17. A device as claimed in claim 16, wherein said controller (45) turns on and off said heaters (42, 43, 46, 47, 49a to 49d, 66 to 74) within a period of 200 ms when turning on and off said heaters (42, 43, 46 , 47, 49a to 49d, 66 to 74) at the same moment, and wherein said controller (45) turns on and off said heaters (42, 43, 46, 47, 49a to 49d, 66 to 74) after 200 ms has passed since turning on and off said heaters (42, 43, 46, 47, 49a to 49d, 66 to 74) with higher priority when turning on and off said heaters (42, 43, 46, 47, 49a to 49d, 66 to 74) after said predetermined interval.

18. A device as claimed in claim 17, wherein said controller (45) is changeable between a heat-up mode for turning on said heaters (42, 43, 46 , 47, 49a to 49d, 66 to 74) of respective said sections (22, 34, 35, 36, 37, 38, 39), and a temperature control mode for controlling temperature in said respective sections (22, 34, 35, 36, 37, 38, 39) such that temperature in said respective sections (22, 34, 35, 36, 37, 38, 39) is kept within respective said set ranges, said controller (45) being shifted to said temperature control mode after said heat-up mode, and said controller (45) determining a number of said heaters (42, 43, 46, 47, 49a to 49d, 66 to 74) in turned-on state at the same time.

**19.** A device as claimed in claim 18, wherein said controller (45) turns on said heaters (42, 43, 46 , 47, 49a to 49d) of said developing tank (34), said fixing tank (35) and said first to said fourth washing tanks (36 to 39 ) in said heat-up mode until temperature in respective tanks (34, 35, 36 to 39) reaches respective said set ranges.

**20.** A device as claimed in claim 19, wherein said controller (45) turns on heaters ( 66 to 74) of said drier (22) while heating said developing tank (34), said fixing tank (35) and said first to said fourth washing tanks (36 to 39) in said heat-up mode until temperature in said drier (22) reaches a heat-up temperature range of said drier (22).

**21.** A device as claimed in claim 19, wherein said controller (45) turns on heaters ( 66 to 74) of said drier (22) before or after heating said developing tank (34), said fixing tank (35) and said first to said fourth washing tanks (36 to 39) in said heat-up mode until temperature in said drier (22) reaches a heat-up temperature range of said drier (22).

**22.** A device as claimed in claim 18, wherein said controller (45) turns on heaters (42, 43, 46, 47, 49a to 49d) of said developing tank (34), said fixing tank (35) and said first to said fourth washing tanks (36 to 39) in said heat-up mode until temperature in respective tanks (34, 35, 36 to 39) reaches respective heat-up temperature ranges which are different from said set ranges.

**23.** A device as claimed in claim 22, wherein said controller (45) turns on heaters ( 66 to 74) of said drier (22) before or after heating said developing tank (34), said fixing tank (35) and said first to said fourth washing tanks (36 to 39) in said heat-up mode until temperature in said drier (22) reaches a heat-up temperature range of said drier (22).

**24.** A method for controlling temperatures in plural sections (22, 34, 35, 36, 37, 38, 39), each of said plural sections (22, 34, 35, 36, 37, 38, 39) having at least one heater (42, 43, 46, 47, 49a to 49d, 66 to 74), said method comprising the steps of:

determining set ranges and priority orders to respective said plural sections (22, 34, 35, 36, 37, 38, 39);
determining an allowable electricity of an power supply (75) for allowing said heaters (42, 43, 46 , 47, 49a to 49d, 66 to 74) to be turned on and off at the same moment; and
monitoring temperatures in said plural sections (22, 34, 35, 36 , 37, 38, 39) by use of thermo sensors (41, 48, 56) provided in said plural sections (22, 34, 35, 36, 37, 38, 39);

**characterized by**

selecting said heaters (42, 43, 46, 47, 49a to 49d, 66 to 74) to be turned on and off sequentially from sections (22, 34, 35, 36, 37, 38, 39) with higher priority until an amount of power consumptions of selected heaters (42, 43, 46 , 47, 49a to 49d, 66 to 74) reaches up to said allowable electricity of said power supply (75) when temperatures in two or more sections (22, 34, 35, 36, 37, 38, 39) are out of respective said set ranges;
turning on and off said selected heaters (42, 43, 46 , 47, 49a to 49d, 66 to 74) at the same moment; and
turning on and off said heaters (42, 43, 46, 47, 49a to 49d, 66 to 74) of remaining said sections with lower priority after a predetermined interval.

**25.** A method as claimed in claim 24, wherein said selected heaters (42, 43, 46, 47, 49a to 49d, 66 to 74) are turned on and off together with a small heater in said sections with lower priority if an amount of power consumptions of said selected heaters (42, 43, 46, 47, 49a to 49d, 66 to 74) and said small heater do not exceed said allowable electricity of said power supply (75).

**26.** A method as claimed in claim 24, wherein said heaters (42, 43, 46 , 47, 49a to 49d, 66 to 74) are connected to a power supply (75) of three-phase four-line type or three-phase three-line type, said heaters (42, 43, 46, 47, 49a to 49d, 66 to 74) being connected to output terminals (76a, 76b, 76c) of different phases of said power supply (75) when a plurality of said heaters (42, 43, 46, 47, 49a to 49d, 66 to 74) are provided in one said section (22, 34, 35, 36, 37, 38, 39).

**27.** A method as claimed in claim 26, wherein at least one of said plural sections (22) is provided with at least one heater group (G1, G2, G3) each of which is consisted of three said heaters ( 66 to 74) connected to output terminals (76a, 76b, 76c) of different phases of said power supply (75), said controller (45) turning on and off all heaters (66 to 74) of respective said heater groups (G1, G2, G3) at the same moment.

**28.** A method as claimed in claim 27, wherein at least one of said plural sections (22) is provided with plural said heater groups (G1, G2, G3), said controller (45) turning on and off said heater groups (G1, G2 , G3) one by one at said predetermined intervals.

**29.** A method as claimed in claim 28, wherein said controller (45) turns on and off said heaters (42, 43, 46,

47, 49a to 49d, 66 to 74) within a period of 200 ms when turning on and off said heaters (42, 43, 46, 47, 49a to 49d, 66 to 74) at the same moment, said controller (45) turning on and off said heaters (42, 43, 46, 47, 49a to 49d, 66 to 74) after 200 ms has passed since turning on and off said heaters (42, 43, 46, 47, 49a to 49d, 66 to 74) with higher priority when turning on and off said heaters (42, 43, 46, 47, 49a to 49d, 66 to 74) after said predetermined interval.

30. A method as claimed in claim 29, wherein said plural sections (22, 34, 35, 36 , 37, 38, 39) are a developing tank (34) for performing development of an exposed photosensitive material (32), a fixing tank (35) for performing fixation of developed said photosensitive material (32), washing tanks (36 to 39) for washing said photosensitive material (32) after fixation, and a drier (22) for drying said photosensitive material (32) after washing;

    wherein said controller (45) determines said priority order of said developing tank(34), said drier (22), said fixing tank (35) and said washing tanks (36 to 39) in this order listed.

**Patentansprüche**

1. Wärmesteuenrorrichtung zum Steuern von Temperaturen in mehreren Abteilen (22, 34, 35, 36, 37, 38, 39), umfassend:

    mindestens eine Heizeinrichtung (42, 43, 46, 47, 49a bis 49d, 66 bis 74), die in den jeweiligen mehreren Abteilen (22, 34, 35, 36, 37, 38, 39) vorgesehen sind;

    eine Stromversorgung (75) zum Zuführen elektrischer Leistung zu den Heizeinrichtungen, wobei die Stromversorgung (75) eine zulässige Elektrizität festlegt, die es den Heizeinrichtungen (42, 43, 46, 47, 49a bis 49d, 66 bis 74) ermöglicht, im gleichen Zeitpunkt ein- und ausgeschaltet zu werden;

    Thermofühler (41, 48, 56) zum Messen der Temperatur in den Abteilen ( 22, 34, 35, 36, 37, 38, 39), wobei jedes der mehreren Abteile (22, 34, 35, 36, 37, 38, 39) den Thermofühler (41, 48, 56) aufweist; und

    eine Steuerung (45) zum Steuern der Temperaturen in den mehreren Abteilen (22, 34, 35, 36, 37, 38, 39) durch Ein- und Ausschalten der Heizeinrichtungen (42, 43, 46, 47, 49a bis 49d, 66 bis 74), wobei die Steuerung (45) an die Heiz-einrichtungen (42, 43, 46, 47, 49a bis 49d, 66 bis 74) und an die Thermofühler (41, 48, 56) angeschlossen ist, die Steuerung (45) Einstellbereiche und Prioritätsreihenfolgen für die mehreren Abteile (22, 34, 35, 36, 37, 38, 39) festlegt, **dadurch gekennzeichnet, daß** die Steuerung die Heizeinrichtungen (42, 43, 46, 47, 49a bis 49d, 66 bis 74), die ein - und auszuschalten sind, sequentiell aus Abteilen (22, 34, 35, 36, 37, 38, 39) mit höherer Priorität auswählt, bis ein Betrag an Leistungsaufnahme ausgewählter Heizeinrichtungen (42, 43, 46, 47, 49a bis 49d, 66 bis 74) die zulässige Elektrizität erreicht, wenn Temperaturen in zwei oder mehr Abteilen (22, 34, 35, 36, 37, 38, 39) außerhalb der zugehörigen eingestellten Bereiche liegen, die ausgewählten Heizeinrichtungen (42, 43, 46, 47, 49a bis 49d, 66 bis 74) gleichzeitig ein- und ausschaltet, und die Heizeinrichtungen (42, 43, 46, 47, 49a bis 49d, 66 bis 74) der übrigen Abteile (22, 34, 35, 36, 37, 38, 39) niedrigerer Priorität nach einem vorbestimmten Zeitintervall einund ausschaltet.

2. Vorrichtung nach Anspruch 1, bei der die Steuerung (45) die Heizeinrichtungen (42, 43, 46, 47, 49a bis 49d, 66 bis 74) nach Maßgabe von Temperaturinformation aus den jeweiligen Abteilen (22, 34, 35, 36, 37, 38, 39) aus den Thermofühlern (41, 48, 56) in den vorbestimmten Zeitintervallen ein- und ausschaltet.

3. Vorrichtung nach Anspruch 2, bei der die Steuerung (45) eine kleine Heizeinrichtung in den Abteilen (22, 34, 35, 36, 37, 38, 39) niedrigerer Priorität und die ausgewählten Heizeinrichtungen (42, 43, 46, 47, 49a bis 49d, 66 bis 74) gleichzeitig ein- und ausschaltet, wenn die Menge an Leistungsaufnahme der ausgewählten Heizeinrichtungen (42, 43, 46, 47, 49a bis 49d, 66 bis 74) und der kleinen Heizeinrichtung eine zulässige Elektrizität der Stromversorgung (75) nicht übersteigt.

4. Vorrichtung nach Anspruch 2, bei der die Stromversorgung (75) entweder vom Drehstrom-Vierleitertyp oder vom Drehstrom-Dreileitertyp ist, und die Heizeinrichtungen (42, 43, 46, 47, 49a bis 49d, 66 bis 74) an Ausgangsanschlüsse (76a, 76b, 76c) verschiedener Phasen der Stromversorgung (75) angeschlossen sind, wenn mehrere der Heizeinrichtungen (42, 43, 46, 47, 49a bis 49d, 66 bis 74) in dem einen Abteil (22, 34, 35, 36, 37, 38, 39) vorgesehen sind.

5. Vorrichtung nach Anspruch 4, bei der mindestens eines der mehreren Abteile (22) mit mindestens einer Heizeinrichtungsgruppe (G1, G2, G3) ausgestattet ist, die jeweils aus drei solchen Heizeinrichtungen (66 bis 74) bestehen, die an Ausgangsanschlüsse (76a, 76b, 76c) unterschiedlicher Phasen der Stromversorgung (75) angeschlossen sind, wobei die Steuerung sämtlicher Heizeinrichtungen (66 bis 74) der einzelnen Heizeinrichtungsgruppen (G1, G2, G3) zum gleichen Zeitpunkt ein - und ausschaltet.

**6.** Vorrichtung nach Anspruch 5, bei der mindestens eines der mehreren Abteile (22) mit mehreren Heizeinrichtungsgruppen (G1, G2, G3) ausgestattet ist und die Steuerung (45) Prioritätsreihenfolgen für die Heizeinrichtungsgruppen (G1, G2, G3) festlegt und die Heizeinrichtungen (66 bis 74) sequentiell ausgehend von den Heizeinrichtungsgruppen (G1, G2, G3) höherer Priorität ein- und ausschaltet.

**7.** Vorrichtung nach Anspruch 5, bei der mindestens eines der mehreren Abteile (22) mit mehreren Heizeinrichtungsgruppen (G1, G2, G3) ausgestattet ist und die Steuerung (45) die Heizeinrichtungsgruppen (G1, G2, G3) einzeln in den vorbestimmten Intervallen ein- und ausschaltet.

**8.** Vorrichtung nach Anspruch 6, bei der die Steuerung (45) die Heizeinrichtungen (42, 43, 46, 47, 49a bis 49d, 66 bis 74) innerhalb einer Zeitspanne von 200 ms beim gleichzeitigen Ein- und Ausschalten der Heizeinrichtungen (42, 43, 46, 47, 49a bis 49d, 66 bis 74) ein- und ausschaltet, und die Steuerung die Heizeinrichtungen (42, 43, 46, 47, 49a bis 49d, 66 bis 74) ein- und ausschaltet, nachdem 200 ms seit dem Ein- und Ausschalten der Heizeinrichtungen (42, 43, 46, 47, 49a bis 49d, 66 bis 74) höherer Priorität vergangen sind, wenn die Heizeinrichtungen (42, 43, 46, 47, 49a bis 49d, 66 bis 74) nach dem vorbestimmten Intervall ein- und ausgeschaltet werden.

**9.** Vorrichtung nach Anspruch 8, bei dem die mehreren Abteile (22, 34, 35, 36, 37, 38, 39) ein Entwicklungstank (34) zum Durchführen einer Entwicklung von belichtetem Photomaterial (32), ein Fixiertank (35) zum Durchführen einer Fixierung des entwickelten Photomaterials (32), Spültanks (36 bis 39) zum Spülen des Photomaterials (32) nach der Fixierung und ein Trockner (22) zum Trocknen des Photomaterials (32) nach dem Spülen sind, wobei die Steuerung (45) die Prioritätsreihenfolge von Entwicklungstank (34), Trockner (22), Fixiertank (35) und Spültanks (36 bis 39) in dieser Reihenfolge festlegt.

**10.** Vorrichtung nach Anspruch 9, bei der die Steuerung (45) die Heizeinrichtung (42, 43, 46, 47, 49a bis 49d, 66 bis 74) beim gleichzeitigen Ein- und Ausschalten der Heizeinrichtungen (42, 43, 46, 47, 49a bis 49d, 66 bis 74) innerhalb einer Zeitspanne von 200 ms ein- und ausschaltet, wobei die Steuerung die Heizeinrichtungen (42, 43, 46, 47, 49a bis 49d, 66 bis 74) ein- und ausschaltet, nachdem 200 ms nach dem Ein- und Ausschalten der Heizeinrichtungen (42, 43, 46, 47, 49a bis 49d, 66 bis 74) höherer Priorität vergangen sind, wenn die Heizeinrichtungen (42, 43, 46, 47, 49a bis 49d, 66 bis 74) nach dem vorbestimmten Zeitintervall ein- und ausgeschaltet werden.

**11.** Vorrichtung nach Anspruch 10, bei dem die mehreren Abteile (22, 34, 35, 36, 37, 38, 39) ein Entwicklungstank (34) zum Durchführen einer Entwicklung von belichtetem Photomaterial (32), ein Fixiertank (35) zum Durchführen einer Fixierung des entwickelten Photomaterials (32), Spültanks (36 bis 39) zum Spülen des Photomaterials (32) nach der Fixierung und ein Trockner (22) zum Trocknen des Photomaterials (32) nach dem Spülen sind, wobei die Steuerung (45) die Prioritätsreihenfolge von Entwicklungstank (34), Trockner (22), Fixiertank (35) und Spültanks (36 bis 39) in dieser Reihenfolge festlegt.

**12.** Vorrichtung nach Anspruch 11, bei der die Stromversorgung (75) entweder vom Drehstrom-Vierleitertyp oder vom Drehstrom-Dreileitertyp ist.

**13.** Vorrichtung nach Anspruch 12, bei dem der Trockner (22) mehrere Heizeinrichtungsgruppen (G1, G2, G3) aufweist, die Heizeinrichtungsgruppe (G1, G2, G3) aus drei Heizeinrichtungen (66 bis 74) besteht, die an Ausgangsanschlüsse (76a, 76b, 76c) verschiedener Phasen der Stromversorgung (75) angeschlossen sind, und die Steuerung (45) sämtlicher Heizeinrichtungen (66 bis 74) der jeweiligen Heizeinrichtungsgruppen (G1, G2, G3) im selben Zeitpunkt ein- und ausschaltet.

**14.** Vorrichtung nach Anspruch 13, bei der die Steuerung (45) die Heizeinrichtungsgruppen (G1, G2, G3) einzeln zu den vorbestimmten Intervallen einschaltet, wenn die Temperatur in dem Trockner (22) unter einem eingestellten Bereich für den Trockner (22) liegt, während die Steuerung (45) die Heizeinrichtungsgruppen (G1, G2, G3) einzeln zu den vorbestimmten Intervallen ausschaltet, wenn die Temperatur in dem Trockner (22) den eingestellten Bereich für den Trockner (22) erreicht.

**15.** Vorrichtung nach Anspruch 14, bei der sowohl der Entwicklungstank (34) als auch der Fixiertank (35) mehrere Heizeinrichtungen (42, 43, 46, 47) aufweist, um eine tankinterne Heizeinrichtungsgruppe zu bilden, die Heizeinrichtungen innerhalb der tankinternen Heizeinrichtungsgruppe an Ausgangsanschlüsse (76a, 76b, 76c) unterschiedlicher Phasen der Stromversorgung (75) angeschlossen sind, die Steuerung (45) die Heizeinrichtungen (42, 43, 46, 47) der tankinternen Heizeinrichtungsgruppe zum gleichen Zeitpunkt einschaltet, wenn die Temperatur in dem Entwicklungstank (34) oder dem Fixiertank (35) unterhalb eines eingestellten Bereichs für diese Tanks (34, 35) liegt, und die Steuerung die Heizeinrichtungen der tankinternen Heizeinrichtungsgruppe zum gleichen Zeitpunkt ausschaltet, wenn die Temperatur in dem Entwicklungstank (34) oder dem Fixiertank (35) den eingestellten Bereich für die betreffenden Tanks (34, 35) erreicht.

16. Vorrichtung nach Anspruch 15, bei der die Spültanks (36 bis 39) einen ersten (36), einen zweiten (37), einen dritten (38) und einen vierten (39) Spültank umfassen, das Photomaterial (32) dem Trockner (22) durch den ersten (36), den zweiten (37), den dritten (38) und den vierten (39) Spültank in dieser Reihenfolge zugeleitet werden, und die Steuerung (45) die Prioritätsreihenfolgen für den vierten (39), den dritten (38), den zweiten (37) und den ersten (36) Spültank in dieser Reihenfolge festlegt.

17. Vorrichtung nach Anspruch 16, bei der die Steuerung (45) die Heizeinrichtungen (42, 43, 46, 47, 49a bis 49d, 66 bis 74) innerhalb einer Zeitspanne von 200 ms beim gleichzeitigen Ein- und Ausschalten der Heizeinrichtungen (42, 43, 46, 47, 49a bis 49d, 66 bis 74) ein- und ausschaltet, und die Steuerung die Heizeinrichtungen (42, 43, 46, 47, 49a bis 49d, 66 bis 74) ein- und ausschaltet, nachdem 200 ms seit dem Ein- und Ausschalten der Heizeinrichtungen (42, 43, 46, 47, 49a bis 49d, 66 bis 74) höherer Priorität vergangen sind, wenn die Heizeinrichtungen (42, 43, 46, 47, 49a bis 49d, 66 bis 74) nach dem vorbestimmten Intervall ein- und ausgeschaltet werden.

18. Vorrichtung nach Anspruch 17, bei der die Steuerung (45) umschaltbar ist zwischen einem Aufheizmodus zum Einschalten der Heizeinrichtungen (42, 43, 46, 47, 49a bis 49d, 66 bis 74) der jeweiligen Abteile (22, 34, 35, 36, 37, 38, 39), und einem Temperatursteuermodus zum Steuern der Temperatur in den jeweiligen Abteilen (22, 34, 35, 36, 37, 38, 39) derart, daß die Temperatur in den jeweiligen Abteilen (22, 34, 35, 36, 37, 38, 39) innerhalb der eingestellten Bereiche gehalten wird, die Steuerung (45) nach dem Aufheizmodus in den Temperatursteuermodus übergeht, und die Steuerung (45) eine Anzahl der Heizeinrichtungen (42, 43, 46, 47, 49a bis 49d, 66 bis 74) gleichzeitig im eingeschalteten Zustand festlegt.

19. Vorrichtung nach Anspruch 18, bei der die Steuerung (45) die Heizeinrichtungen (42, 43, 46, 47, 49a bis 49d) des Entwicklungstanks (34), des Fixiertanks (35) und des ersten bis vierten Spültanks (36 bis 39) im Aufheizmodus einschaltet, bis die Temperatur in den jeweiligen Tanks (34, 35, 36 bis 39) die eingestellten Bereiche erreicht.

20. Vorrichtung nach Anspruch 19, bei der die Steuerung (45) die Heizeinrichtungen (66 bis 74) des Trockners (22) einschaltet, während der Entwicklungstank (34), der Fixiertank (35) und der erste bis vierte Spültank (36 bis 39) sich im Aufheizmodus befinden, bis die Temperatur des Trockners (22) einen Aufheiztemperaturbereich für den Trockner (22) erreicht.

21. Vorrichtung nach Anspruch 19, bei der die Steuerung (45) Heizeinrichtungen (66 bis 74) des Trockners (22) einschaltet, bevor oder nachdem der Entwicklungstank (34), der Fixiertank (35) und der erste bis vierte Spültank (36 bis 39) im Aufheizmodus aufgeheizt werden, bis die Temperatur in dem Trockner (22) einen Aufheiztemperaturbereich für den Trockner (22) erreicht.

22. Vorrichtung nach Anspruch 18, bei der die Steuerung (45) Heizeinrichtungen (42, 43, 46, 47, 49a bis 49d) des Entwicklungstanks (34), des Fixiertanks (35) und des ersten bis vierten Spültanks (36 bis 39) im Aufheizmodus einschaltet, bis die Temperatur der jeweiligen Tanks (34, 35, 36 bis 39) zugehörige Aufheiztemperaturbereiche erreicht, die verschieden von den eingestellten Bereichen sind.

23. Vorrichtung nach Anspruch 22, bei der die Steuerung (45) Heizeinrichtungen (66 bis 74) des Trockners (22) einschaltet, bevor oder nachdem der Entwicklungstank (34), der Fixiertank (35) und der erste bis vierte Spültank (36 bis 39) im Aufheizmodus aufgeheizt werden, bis die Temperatur in dem Trockner (22) einen Aufheiztemperaturbereich für den Trockner (22) erreicht.

24. Verfahren zum Steuern von Temperaturen in mehreren Abteilen (22, 34, 35, 36, 37, 38, 39), von denen jedes mindestens eine Heizeinrichtung (42, 43, 46, 47, 49a bis 49d, 66 bis 74) enthält, umfassend folgende Schritte:

   Festlegen von eingestellten Bereichen und Prioritätsreihenfolgen für die mehreren Abteile (22, 34, 35, 36, 37, 38, 39);

   Festlegen einer zulässigen Elektrizität einer Stromversorgung (75), um den Heizeinrichtungen (42, 43, 46, 47, 49a bis 49d, 66 bis 74) zu ermöglichen, im gleichen Zeitpunkt ein- und ausgeschaltet zu werden; und

   Überwachen von Temperaturen in den mehreren Abteilen (22, 34, 35, 36, 37, 38, 39) unter Einsatz von Thermofühlern (41, 48, 56), die sich in den mehreren Abteilen (22, 34, 35, 36, 37, 38, 39) befinden;

**gekennzeichnet durch** das

Auswählen der Heizeinrichtungen (42, 43, 46, 47, 49a bis 49d, 66 bis 74), die ein- und auszuschalten sind, in sequentieller Weise aus Abteilen (22, 34, 35, 36, 37, 38, 39) höherer Priorität, bis ein Betrag der Leistungsaufnahme ausgewählter Heizeinrichtungen (42, 43, 46, 47, 49a bis 49d, 66 bis 74) die zulässige Elektrizität der Stromversorgung (75) erreicht, wenn Temperaturen in zwei oder mehr Abteilen (22, 34, 35, 36, 37, 38, 39) außerhalb zugehöriger Einstellbereiche liegen;

gleichzeitiges Ein- und Ausschalten der ausgewählten Heizeinrichtungen (42, 43, 46, 47, 49a bis 49d, 66 bis 74); und

Ein- und Ausschalten der Heizeinrichtungen (42, 43, 46, 47, 49a bis 49d, 66 bis 74) der übrigen Abteile niedrigerer Priorität nach einem vorbestimmten Zeitintervall.

25. Verfahren nach Anspruch 24, bei dem die ausgewählten Heizeinrichtungen (42, 43, 46, 47, 49a bis 49d, 66 bis 74) gemeinsam mit einer kleinen Heizeinrichtung in den Abteilen niedrigerer Priorität ein- und ausgeschaltet werden, falls der Betrag der Leistungsaufnahme der ausgewählten Heizeinrichtungen (42, 43, 46, 47, 49a bis 49d, 66 bis 74) und der kleinen Heizeinrichtung die zulässige Elektrizität der Stromversorgung (75) nicht übersteigt.

26. Verfahren nach Anspruch 24, bei dem die Heizeinrichtungen (42, 43, 46, 47, 49a bis 49d, 66 bis 74) an eine Stromversorgung (75) vom Drehstrom-Vierleitertyp oder vom Drehstrom-Dreileitertyp angeschlossen sind, die Heizeinrichtungen (42, 43, 46, 47, 49a bis 49d, 66 bis 74) an Ausgangsanschlüsse (76a, 76b, 76c) verschiedener Phasen der Stromversorgung (75) angeschlossen werden, wenn mehrere der Heizeinrichtungen (42, 43, 46, 47, 49a bis 49d, 66 bis 74) in einem Abteil (22, 34, 35, 36, 37, 38, 39) vorgesehen sind.

27. Verfahren nach Anspruch 26, bei dem mindestens eines der mehreren Abteile (22) mit mindestens einer Heizeinrichtungsgruppe (G1, G2, G3) ausgestattet ist, jeweils bestehend aus drei Heizeinrichtungen (66 bis 74), die an Ausgangsanschlüsse (76a, 76b, 76c) verschiedener Phasen der Stromversorgung (75) angeschlossen sind, wobei die Steuerung (45) sämtlicher Heizeinrichtungen (66 bis 74) betreffender Heizeinrichtungsgruppen (G1, G2, G3) im gleichen Zeitpunkt ein- und ausschaltet.

28. Verfahren nach Anspruch 27, bei dem mindestens eines der mehreren Abteile (22) mit mehreren Heizeinrichtungsgruppen (G1, G2, G3) ausgestattet ist und die Steuerung (45) die Heizeinrichtungsgruppen (G1, G2, G3) einzeln zu den vorbestimmten Zeitintervallen ein- und ausschaltet.

29. Verfahren nach Anspruch 28, bei dem die Steuerung (45) die Heizeinrichtungen (42, 43, 46, 47, 49a bis 49d, 66 bis 74) innerhalb einer Zeitspanne von 200 ms beim gleichzeitigen Ein- und Ausschalten der Heizeinrichtungen (42, 43, 46, 47, 49a bis 49d, 66 bis 74) ein- und ausschaltet, und die Steuerung die Heizeinrichtungen (42, 43, 46, 47, 49a bis 49d, 66 bis 74) ein- und ausschaltet, nachdem 200 ms seit dem Ein- und Ausschalten der Heizeinrichtungen (42, 43, 46, 47, 49a bis 49d, 66 bis 74) höherer Priorität vergangen sind, wenn die Heizeinrichtungen (42, 43, 46, 47, 49a bis 49d, 66 bis 74) nach dem vorbestimmten Intervall ein- und ausgeschaltet werden.

30. Verfahren nach Anspruch 29, bei dem die mehreren Abteile (22, 34, 35, 36, 37, 38, 39) ein Entwicklungstank (34) zum Durchführen einer Entwicklung von belichtetem Photomaterial (32), ein Fixiertank (35) zum Durchführen einer Fixierung des entwickelten Photomaterials (32), Spültanks (36 bis 39) zum Spülen des Photomaterials (32) nach der Fixierung und ein Trockner (22) zum Trocknen des Photomaterials (32) nach dem Spülen sind,
wobei die Steuerung (45) die Prioritätsreihenfolge von Entwicklungstank (34), Trockner (22), Fixiertank (35) und Spültanks (36 bis 39) in dieser Reihenfolge festlegt.

**Revendications**

1. Dispositif de contrôle thermique pour contrôler les températures dans des sections multiples (22, 34, 35, 36, 37, 38, 39), comprenant :

au moins un dispositif de chauffage (42, 43, 46, 47, 49a à 49d, 66 à 74) prévu dans lesdites sections multiples (22, 34, 35, 36, 37, 38, 39) ;
une alimentation d'énergie (75) pour alimenter l'énergie électrique auxdits dispositifs de chauffage, ladite alimentation d'énergie (75) déterminant une électricité admissible pour permettre auxdits dispositifs de chauffage (42, 43, 46, 47, 49a à 49d, 66 à 74) d'être mis en marche et arrêtés au même moment ;
des capteurs thermiques (41, 48, 56) pour mesurer la température dans lesdites sections (22, 34, 35, 36, 37, 38, 39), chacune desdites sections multiples (22, 34, 35, 36, 37, 38, 39) comprenant ledit capteur thermique (41, 48, 56) ; et

un contrôleur (45) pour contrôler les températures dans lesdites sections multiples (22, 34, 35, 36, 37, 38, 39) en mettant en marche et en arrêtant lesdits dispositifs de chauffage (42, 43, 46, 47, 49a à 49d, 66 à 74), ledit contrôleur (45) étant raccordé auxdits dispositifs de chauffage (42, 43, 46, 47, 49a à 49d, 66 à 74) et auxdits capteurs thermiques (41, 48, 56), ledit contrôleur (45) déterminant des plages déterminées et des ordres de priorité par rapport auxdites sections multiples respectives (22, 34, 35, 36, 37, 38, 39, ), **caractérisé en ce que** ledit contrôleur sélectionne lesdits dispositifs de chauffage (42, 43, 46, 47, 49a à 49d, 66 à 74) à mettre en marche et à arrêter en séquence à partir des sections (22, 34, 35, 36, 37, 38, 39) avec une plus grande priorité jusqu'à ce qu'une quantité de consommations d'énergie des dispositifs de chauffage sélectionnés (42, 43, 46, 47, 49a à 49d, 66 à 74) atteigne jusqu'à ladite électricité admissible lorsque les températures dans deux ou plusieurs sections (22, 34, 35, 36, 37, 38, 39) se situent hors desdites plages déterminées respectives, met en marche et arrête lesdits dispositifs de chauffage sélectionnés (42, 43, 46, 47, 49a à 49d, 66 à 74) en même temps, et met en marche et arrête lesdits dispositifs de chauffage (42, 43, 46, 47, 49a à 49d, 66 à 74) des sections restantes (22, 34, 35, 36, 37, 38, 39) avec une priorité moins importante après un intervalle prédéterminé.

2. Dispositif selon la revendication 1, dans lequel ledit contrôleur (45) met en marche et arrête les dispositifs de chauffage (42, 43, 46, 47, 49a à 49d, 66 à 74) selon l'information de température des sections respectives (22, 34, 35, 36, 37, 38, 39) provenant desdits capteurs thermiques (41, 48, 56) auxdits intervalles prédéterminés.

3. Dispositif selon la revendication 2, dans lequel ledit contrôleur (45) met en marche et arrête un petit dispositif de chauffage dans lesdites sections (22, 34, 35, 36, 37, 38, 39) avec une priorité moins importante et lesdits dispositifs de chauffage sélectionnés (42, 43, 46, 47, 49a à 49d, 66 à 74) en même temps si une quantité de consommations d'énergie desdits dispositifs de chauffage sélectionnés (42, 43, 46, 47, 49a à 49d, 66 à 74) et dudit petit dispositif de chauffage de dépasse pas ladite électricité admissible de ladite alimentation d'énergie (75).

4. Dispositif selon la revendication 2, dans lequel ladite alimentation d'énergie (75) est soit un type à quatre lignes triphasées ou un type à trois lignes triphasées, lesdits dispositifs de chauffage (42, 43, 46, 47, 49a à 49d, 66 à 74) étant raccordés aux bornes de sortie (76a, 76b, 76c) des différentes phases de ladite alimentation d'énergie (75) lorsque plusieurs desdits dispositifs de chauffage (42, 43, 46, 47, 49a à49d, 66 à 74) sont prévus dans l'une desdites sections (22, 34, 35, 36, 37, 38, 39).

5. Dispositif selon la revendication 4, dans lequel au moins l'une desdites sections multiples (22) est prévue avec au moins l'un des groupes de dispositif de chauffage (G1, G2, G3) dont chacun se compose de trois desdits dispositifs de chauffage (66 à 74) raccordés aux bornes de sortie (76a, 76b, 76c) des différentes phases de ladite alimentation d'énergie (75), ledit contrôleur (45) mettant en marche et arrêtant tous les dispositifs de chauffage (66 à 74) desdits groupes de dispositif de chauffage respectifs (G1, G2, G3) en même temps.

6. Dispositif selon la revendication 5, dans lequel au moins l'une desdites sections multiples (22) est prévue avec plusieurs desdits groupes de dispositif de chauffage (G1, G2, G3), ledit contrôleur (45) déterminant les ordres de priorité desdits groupes de dispositif de chauffage (G1, G2, G3) , et mettant en marche et arrêtant lesdits dispositifs de chauffage (66 à 74) en séquence à partir desdits groupes de dispositif de chauffage (G1, G2, G3) avec une priorité plus importante.

7. Dispositif selon la revendication 5, dans lequel au moins l'une desdites sections multiples (22) est prévue avec plusieurs desdits groupes de dispositif de chauffage (G1, G2, G3), ledit contrôleur (45) mettant en marche et arrêtant lesdits groupes de dispositif de chauffage (G1, G2, G3) un par un auxdits intervalles prédéterminés.

8. Dispositif selon la revendication 6, dans lequel ledit contrôleur (45) met en marche et arrête lesdits dispositifs de chauffage (42, 43, 46, 47, 49a à 49d, 66 à 74) dans une période de 200 ms lorsque l'on met en marche et que l'on arrête lesdits dispositifs de chauffage (42, 43, 46, 47, 49a à 49d, 66 à 74) en même temps, et dans lequel ledit contrôleur met en marche et arrête lesdits dispositifs de chauffage (42, 43, 46, 47, 49a à 49d, 66 à 74) après que 200 ms se soient écoulés depuis la mise en marche et l'arrêt desdits dispositifs de chauffage (42, 43, 46, 47, 49a à 49d, 66 à 74) avec une priorité plus importante lorsque l'on met en marche et que l'on arrête lesdits dispositifs de chauffage (42, 43, 46, 47, 49a à 49d, 66 à 74) après ledit intervalle prédéterminé.

9. Dispositif selon la revendication 8, dans lequel lesdites sections multiples (22, 34, 35, 36, 37, 38, 39) sont un bac de développement (34) pour réaliser le développement d'un matériau photosensible (32), un bac de fixation (35) pour effectuer la fixation dudit matériau photosensible développé (32), des bacs de lavage (36 à 39) pour laver ledit matériau photosensible (32) après la fixation, et une sécheuse (22) pour sécher ledit matériau photosensible (32) après le lavage ;

dans lequel ledit contrôleur (45) détermine ledit ordre de priorité dudit bac de développement (34), de ladite sécheuse (22), dudit bac de fixation (35) et desdits bacs de lavage (36 à 39) dans cet ordre.

10. Dispositif selon la revendication 9, dans lequel ledit contrôleur (45) met en marche et arrête lesdits dispositifs de chauffage (42, 43, 46, 47, 49a à 49d, 66 à 74) dans une période de 200 ms lorsque l'on met en marche et que l'on arrête lesdits dispositifs de chauffage (42, 43, 46, 47, 49a à 49d, 66 à 74) en même temps, et dans lequel ledit contrôleur met en marche et arrête lesdits dispositifs de chauffage (42, 43, 46, 47, 49a à 49d, 66 à 74) après que 200 ms se soient écoulés depuis la mise en marche et l'arrêt desdits dispositifs de chauffage (42, 43, 46, 47, 49a à 49d, 66 à 74) avec une priorité plus importante lorsque l'on met en marche ou que l'on arrête lesdits dispositifs de chauffage (42, 43, 46, 47, 49a à 49d, 66 à 74) après ledit intervalle prédéterminé.

11. Dispositif selon la revendication 10, dans lequel lesdites sections multiples (22, 34, 35, 36, 37, 38, 39) sont un bac de développement (34) pour effectuer le développement d'un matériau photosensible exposé (32), un bac de fixation (35) pour effectuer la fixation dudit matériau photosensible développé (32), des bacs de lavage (36 à 39) pour laver ledit matériau photosensible (32) après la fixation, et une sécheuse (22) pour sécher ledit matériau photosensible (32) après lavage ;

dans lequel ledit contrôleur (45) détermine ledit ordre de priorité dudit bac de développement (34), de ladite sécheuse (22), dudit bac de fixation (35) et desdits bacs de lavage (36 à 39) dans cet ordre.

12. Dispositif selon la revendication 11, dans lequel ladite alimentation d'énergie (75) est soit un type à quatre lignes triphasées ou un type à trois lignes triphasées.

13. Dispositif selon la revendication 12, dans lequel ladite sécheuse (22) possède plusieurs groupes de dispositif de chauffage (G1, G2, G3), ledit groupe de dispositif de chauffage (G1, G2, G3) se composant de trois desdits dispositifs de chauffage (66 à 74) raccordés aux bornes de sortie (76a, 76b, 76c) des différentes phases de ladite alimentation d'énergie (75), ledit contrôleur (45) mettant en marche et arrêtant tous les dispositifs de chauffage (66 à 74) desdits groupes de dispositif de chauffage respectifs (G1, G2, G3) en même temps.

14. Dispositif selon la revendication 13, dans lequel ledit contrôleur (45) met en marche lesdits groupes de dispositif de chauffage (G1, G2, G3) un par un auxdits intervalles prédéterminés lorsque la température dans ladite sécheuse (22) se situe au dessous d'une plage déterminée de ladite sécheuse (22), et dans lequel ledit contrôleur (45) met en marche lesdits groupes de dispositif de chauffage (G1, G2, G3) un par un auxdits intervalles prédéterminés lorsque la température dans ladite sécheuse (22) atteint ladite plage déterminée de ladite sécheuse (22).

15. Dispositif selon la revendication 14, dans lequel chacun parmi ledit bac de développement (34) et ledit bac de fixation (35) possède plusieurs dispositifs de chauffage (42, 43, 46, 47) pour comprendre un groupe de dispositif de chauffage dans le bac, lesdits dispositifs de chauffage dudit groupe de dispositif de chauffage dans le bac raccordés aux bornes de sortie (76a, 76b, 76c) de différentes phases de ladite alimentation d'énergie (75), ledit contrôleur (45) mettant en marche lesdits dispositifs de chauffage (42, 43, 46, 47) du groupe de dispositif de chauffage dans le bac en même temps lorsque la température dans ledit bac de développement (34) ou dans ledit bac de fixation (35) se situe au dessous d'une plage déterminée des bacs respectifs (34, 35), et ledit contrôleur arrêtant lesdits dispositifs de chauffage dans le groupe de dispositif de chauffage dans le bac en même temps lorsque la température dans ledit bac de développement (34) ou dans ledit bac de fixation (35) atteint ladite plage déterminée desdits bacs respectifs (34, 35).

16. Dispositif selon la revendication 15, dans lequel lesdits bacs de lavage (36 à 39) comprennent des premier (36), deuxième (37), troisième (38) et quatrième bacs de lavage, ledit matériau photosensible (32) étant transporté vers ladite sécheuse (22) par le biais desdits premier (36), deuxième (37), troisième (38) et quatrième (39) bacs de lavage dans cet ordre, ledit contrôleur (45) déterminant lesdits ordres de priorité auxdits quatrième (39), troisième (38), deuxième (37) et premier (36) bacs de lavage dans cet ordre.

17. Dispositif selon la revendication 16, dans lequel ledit contrôleur (45) met en marche et arrête lesdits dispositifs de chauffage (42, 43, 46, 47, 49a à 49d, 66 à 74) dans une période de 200 ms lorsque l'on met en marche ou que l'on arrête lesdits dispositifs de chauffage (42, 43, 46, 47, 49a à 49d, 66 à 74) en même temps, et dans lequel ledit contrôleur (45) met en marche et arrête lesdits dispositifs de chauffage (42, 43, 46, 47, 49a à 49d, 66 à 74) après que 200 ms se soient écoulés depuis la mise en marche et l'arrêt desdits dispositifs de chauffage (42, 43, 46, 47, 49a à 49d, 66 à 74) avec une priorité plus importante lorsque l'on met en marche et que l'on arrête lesdits dispositifs de chauffage (42, 43, 46, 47, 49a à 49d, 66 à 74) après ledit intervalle prédéterminé.

18. Dispositif selon la revendication 17, dans lequel ledit contrôleur (45) peut être modifié entre un mode de chauffage pour mettre en marche lesdits dispositifs de chauffage (42, 43, 46, 47, 49a à 49d, 66 à 74) desdites sections respectives (22, 34, 35, 36, 37, 38, 39) et un mode de contrôle de température pour contrôler la température dans lesdites sections respectives (22, 34, 35, 36, 37, 38, 39), de sorte que la température dans lesdites sections respectives (22, 34, 35, 36, 37, 38, 39) soit maintenue dans lesdites plages déterminées respectives, ledit contrôleur (45) étant déplacé vers ledit mode de contrôle de température après ledit mode de chauffage, et ledit contrôleur (45) déterminant un certain nombre desdits dispositifs de chauffage (42, 43, 46, 47, 49a à 49d, 66 à 74) dans l'état mis en marche en même temps.

19. Dispositif selon la revendication 18, dans lequel ledit contrôleur (45) met en marche lesdits dispositifs de chauffage (42, 43, 46, 47, 49a à 49d, 66 à 74) dudit bac de développement (34), dudit bac de fixation (35) et dudit premier audit quatrième bac de lavage (36 à 39) dans ledit mode de chauffage jusqu'à ce que la température dans les bacs respectifs (34, 35, 36 à 39) atteigne lesdites plages déterminées respectives.

20. Dispositif selon la revendication 19, dans lequel ledit contrôleur (45) met en marche les dispositifs de chauffage (66 à 74) de ladite sécheuse (22) tout en chauffant ledit bac de développement (34), ledit bac de fixation (35) et dudit premier audit quatrième bac de lavage (36 à 39) dans ledit mode de chauffage, jusqu'à ce que la température dans ladite sécheuse (22) atteigne une plage de température de chauffage de ladite sécheuse (22) .

21. Dispositif selon la revendication 19, dans lequel ledit contrôleur (45) met en marche les dispositifs de chauffage (66 à 74) de ladite sécheuse (22) avant ou après le chauffage dudit bac de développement (34), ledit bac de fixation (35) et dudit premier audit quatrième bac de lavage (36 à 39) dans ledit mode chauffage jusqu'à ce que la température dans ladite sécheuse (22) atteigne une plage de température de chauffage de ladite sécheuse (22).

22. Dispositif selon la revendication 18, dans lequel ledit contrôleur (45) met en marche lesdits dispositifs (42, 43, 46, 47, 49a à 49d) dudit bac de développement (34), dudit bac de fixation (35) et dudit premier audit quatrième bac de lavage (36 à 39) dans ledit mode de chauffage jusqu'à ce que la température dans les bacs respectifs (34, 35, 36 à 39) atteigne les plages de température de chauffage qui sont différentes desdites plages déterminées.

23. Dispositif selon la revendication 22, dans lequel ledit contrôleur (45) met en marche les dispositifs de chauffage (66 à 74) de ladite sécheuse (22) avant et après le chauffage dudit bac de développement (34), dudit bac de fixation (35) et dudit premier audit quatrième bac de lavage (36 à 39) dans ledit mode de chauffage jusqu'à ce que la température dans ladite sécheuse (22) atteigne une plage de température de chauffage de ladite sécheuse (22).

24. Procédé pour contrôler les températures dans des sections multiples (22, 34, 35, 36, 37, 38, 39), chacune desdites sections multiples (22, 34, 35, 36, 37, 38, 39) comprenant au moins un dispositif de chauffage (42, 43, 46, 47, 49a à 49d, 66 à 74), ledit procédé comprenant les étapes consistant à :

déterminer les plages déterminées et les ordres de priorité par rapport auxdites sections multiples respectives (22, 34, 35, 36, 37, 38, 39) ;
déterminer une électricité admissible d'une alimentation d'énergie (75) pour permettre auxdits dispositifs de chauffage (42, 43, 46, 47, 49a à 49d, 66 à 74) d'être mis en marche et arrêtés en même temps ; et
surveiller les températures dans lesdites sections multiples (22, 34, 35, 36, 37, 38, 39) en utilisant des capteurs thermiques (41, 48, 56) prévus dans lesdites sections multiples (22, 34, 35, 36, 37, 38, 39) ;

**caractérisé en ce qu'**il comprend les étapes consistant à :

sélectionner lesdits dispositifs de chauffage (42, 43, 46, 47, 49a à 49d, 66 à 74) à mettre en marche et à arrêter en séquence à partir des sections (22, 34, 35, 36, 37, 38, 39) avec une priorité plus importante jusqu'à ce qu'une quantité de consommations d'énergie des dispositifs de chauffage (42, 43, 46, 47, 49a à 49d, 66 à 74) atteigne jusqu'à ladite électricité admissible de ladite alimentation d'énergie (75) lorsque les températures dans deux ou plusieurs sections (22, 34, 35, 36, 37, 38, 39) se situent hors desdites plages déterminées respectives ;
mettre en marche et arrêter lesdits dispositifs de chauffage (42, 43, 46, 47, 49a à 49d, 66 à

**17**

74) en même temps ; et

mettre en marche et arrêter lesdits dispositifs de chauffage (42, 43, 46, 47, 49a à 49d, 66 à 74) desdites sections restantes avec une priorité moins importante après un intervalle prédéterminé.

25. Procédé selon la revendication 24, dans lequel lesdits dispositifs de chauffage sélectionnés (42, 43, 46, 47, 49a à 49d, 66 à 74) sont mis en marche et arrêtés ensemble avec un petit dispositif de chauffage dans lesdites sections avec une priorité moins importante si une quantité de consommations d'énergie desdits dispositifs de chauffage sélectionnés (42, 43, 46, 47, 49a à 49d, 66 à 74) et dudit petit dispositif de chauffage ne dépasse pas ladite électricité admissible de ladite alimentation d'énergie (75).

26. Procédé selon la revendication 24, dans lequel lesdits dispositifs de chauffage (42, 43, 46, 47, 49a à 49d, 66 à 74) sont raccordés à une alimentation d'énergie (75) de type à quatre lignes triphasées ou de type à trois lignes triphasées, lesdits dispositifs de chauffage (42, 43, 46, 47, 49a à 49d, 66 à 74) étant raccordés aux bornes de sortie (76a, 76b, 76c) des différentes phases de ladite alimentation d'énergie (75) lorsqu'une pluralité desdits dispositifs de chauffage (42, 43, 46, 47, 49a à 49d, 66 à 74) est prévue dans ladite une section (22, 34, 35, 36, 37, 38, 39).

27. Procédé selon la revendication 26, dans lequel au moins l'une desdites sections multiples (22) est prévue avec au moins un groupe de dispositif de chauffage (G1, G2, G3), dont chacun se compose de trois desdits dispositifs de chauffage (66 à 74) raccordés aux bornes de sortie (76a, 76b, 76c) de différentes phases de ladite alimentation d'énergie (75), ledit contrôleur (45) mettant en marche et arrêtant tous les dispositifs de chauffage (66 à 74) desdits groupes de dispositif de chauffage respectifs (G1, G2, G3) en même temps.

28. Procédé selon la revendication 27, dans lequel au moins l'une desdites sections multiples (22) est prévue avec plusieurs desdits groupes de dispositif de chauffage (G1, G2, G3), ledit contrôleur (45) mettant en marche et arrêtant lesdits groupes de dispositif de chauffage (G1, G2, G3) un par un auxdits intervalles prédéterminés.

29. Procédé selon la revendication 28, dans lequel ledit contrôleur (45) met en marche et arrête lesdits dispositifs de chauffage (42, 43, 46, 47, 49a à 49d, 66 à 74) dans une période de 200 ms lorsque l'on met en marche et que l'on arrête lesdits dispositifs de chauffage (42, 43, 46, 47, 49a à 49d, 66 à 74) en même temps, ledit contrôleur (45) mettant en marche et arrêtant lesdits dispositifs de chauffage (42, 43, 46, 47, 49a à 49d, 66 à 74) après que 200 ms se soient écoulés depuis la mise en marche et l'arrêt desdits dispositifs de chauffage (42, 43, 46, 47, 49a à 49d, 66 à 74) avec une priorité plus importante lorsque l'on met en marche et que l'on arrête lesdits dispositifs de chauffage (42, 43, 46, 47, 49a à 49d, 66 à 74) après ledit intervalle prédéterminé.

30. Procédé selon la revendication 29, dans lequel lesdites sections multiples (22, 34, 35, 36, 37, 38, 39) sont un bac de développement (34) pour effectuer le développement d'un matériau photosensible exposé (32), un bac de fixation (35) pour effectuer la fixation dudit matériau photosensible développé (32), des bacs de lavage (36 à 39) pour laver ledit matériau photosensible (32) après la fixation, et une sécheuse (22) pour sécher ledit matériau photosensible (32) après le lavage ;

dans lequel ledit contrôleur (45) détermine ledit ordre de priorité dudit bac de développement (34), de ladite sécheuse (22), dudit bac de fixation (35) et desdits bacs de lavage (36 à 39) dans cet ordre.

# FIG.1

EP 1 160 545 B1

# FIG.2

CONTROLLER

# FIG.3

CONTROLLER

# FIG.4

CONTROLLER

SSR

FIG.5

EP 1 160 545 B1

# FIG.6

TEMPERATURE OF
DRYING CHAMBER

SET VALUE

HEATER GROUP G1    ON / OFF

HEATER GROUP G2    ON / OFF

HEATER GROUP G3    ON / OFF

TIME

EP 1 160 545 B1

# FIG.7

```
          ( START )
              │
    ┌─────────────────────┐
    │  TURN ON HEATERS     │
    │ 42, 43, 46, 47, 49a - 49d │
    └─────────────────────┘
              │
    ┌────────>│
    │  ┌─────────────────────┐
    │  ║  HEAT - UP FLAG      ║
    │  ║   SET PROCESS        ║
    │  └─────────────────────┘
    │         │
    │   ╱─────────────────╲
   NO  ⟨   ALL HEAT - UP    ⟩
    └──⟨ FLAGS ARE "TRUE" ? ⟩
        ╲─────────────────╱
              │ YES
              ▼
          (  END  )
```

## FIG.8

```
       ┌──────────────────┐
       │  HEAT - UP FLAG  │
       │   SET PROCESS    │
       └──────────────────┘
              │
    ┌─────────────────────┐  YES    ┌──────────────────────────────┐
    │  TEMPERATURE IN     │────────▶│  TURN OFF HEATERS 42, 43     │
    │  DEVELOPING TANK 34 │         └──────────────────────────────┘
    │  REACHES SET RANGE? │         ┌──────────────────────────────┐
    └─────────────────────┘         │  SET DEVELOPING TANK         │
           │ NO                     │  HEAT - UP COMPLETION FLAG   │
           │                        └──────────────────────────────┘
    ┌─────────────────────┐  YES
    │  TEMPERATURE IN     │────────▶
    │  DEVELOPING TANK 34 IS        ┌──────────────────────────────┐
    │  BELOW SET RANGE?   │         │  TURN ON HEATERS 42, 43      │
    └─────────────────────┘         └──────────────────────────────┘
           │ NO
           │
    ┌─────────────────────┐  YES
    │  TEMPERATURE IN     │────────▶
    │  FIXING TANK 35     │         ┌──────────────────────────────┐
    │  REACHES SET RANGE? │         │  TURN OFF HEATERS 46, 47     │
    └─────────────────────┘         └──────────────────────────────┘
           │ NO                     ┌──────────────────────────────┐
           │                        │  SET FIXING TANK             │
           │                        │  HEAT - UP COMPLETION FLAG   │
           │                        └──────────────────────────────┘
    ┌─────────────────────┐  YES
    │  TEMPERATURE IN     │────────▶
    │  FIXING TANK 35 IS  │         ┌──────────────────────────────┐
    │  BELOW SET RANGE?   │         │  TURN ON HEATERS 46, 47      │
    └─────────────────────┘         └──────────────────────────────┘
           │ NO
           │
    ┌─────────────────────┐  YES
    │  TEMPERATURE IN     │────────▶
    │  4TH WASHING TANK 39          ┌──────────────────────────────┐
    │  REACHES SET RANGE? │         │  TURN OFF HEATER 49d         │
    └─────────────────────┘         └──────────────────────────────┘
           │ NO                     ┌──────────────────────────────┐
           │                        │  SET 4TH WASHING TANK        │
           │                        │  HEAT - UP COMPLETION FLAG   │
           │                        └──────────────────────────────┘
    ┌─────────────────────┐  YES
    │  TEMPERATURE IN     │────────▶
    │  4TH WASHING TANK 39          ┌──────────────────────────────┐
    │  IS BELOW SET RANGE?│         │  TURN ON HEATER 49d          │
    └─────────────────────┘         └──────────────────────────────┘
           │ NO
           ▼
          (A)
```

# FIG.9

A

TEMPERATURE IN 3RD WASHING TANK 38 REACHES SET RANGE ? — YES → TURN OFF HEATER 49c → SET 3RD WASHING TANK HEAT-UP COMPLETION FLAG

NO

TEMPERATURE IN 3RD WASHING TANK 38 IS BELOW SET RANGE ? — YES → TURN ON HEATER 49c

NO

TEMPERATURE IN 2ND WASHING TANK 37 REACHES SET RANGE ? — YES → TURN OFF HEATER 49b → SET 2ND WASHING TANK HEAT-UP COMPLETION FLAG

NO

TEMPERATURE IN 2ND WASHING TANK 37 IS BELOW SET RANGE ? — YES → TURN ON HEATER 49b

NO

TEMPERATURE IN 1ST WASHING TANK 36 REACHES SET RANGE ? — YES → TURN OFF HEATER 49a → SET 1ST WASHING TANK HEAT-UP COMPLETION FLAG

NO

TEMPERATURE IN 1ST WASHING TANK 36 IS BELOW SET RANGE ? — YES → TURN ON HEATER 49a

NO

RETURN

# FIG.10

FIG.11

# FIG.12

START

TURN ON HEATERS
42, 43, 46, 47, 49a - 49d, 66 - 74

HEAT - UP FLAG
SET PROCESS

TEMPERATURE IN
DRYING CHAMBER 22
REACHES SET RANGE ? — YES → TURN ON
HEATERS 66 - 74

NO

SET DRYING CHAMBER
HEAT - UP COMPLETION
FLAG

TEMPERATURE IN
4TH WASHING TANK 39
IS BELOW SET RANGE ? — YES → TURN OFF
HEATERS 66 - 74

NO

ALL HEAT - UP
NO — FLAGS ARE "TRUE" ?

YES

END

# FIG.13

START

TURN ON HEATERS
42, 43, 46, 47, 49a - 49d

HEAT - UP FLAG
SET PROCESS

NO — ALL HEAT - UP
FLAGS ARE "TRUE" ?

YES

TURN ON HEATERS 66 - 74

HEATER DRIVING
PROCESS

NO — TEMPERATURE IN
DRYING CHAMBER 22
REACHES SET RANGE ?

YES

TURN OFF HEATERS 66 - 74

END

FIG.14

HEATER DRIVING PROCESS

TEMPERATURE IN DEVELOPING TANK 34 REACHES SET RANGE ? — YES → TURN OFF HEATERS 42, 43

NO

TEMPERATURE IN DEVELOPING TANK 34 IS BELOW SET RANGE ? — YES → TURN ON HEATERS 42, 43

NO

TEMPERATURE IN FIXING TANK 35 REACHES SET RANGE ? — YES → TURN OFF HEATERS 46, 47

NO

TEMPERATURE IN FIXING TANK 35 IS BELOW SET RANGE ? — YES → TURN ON HEATERS 46, 47

NO

TEMPERATURE IN 4TH WASHING TANK 39 REACHES SET RANGE ? — YES → TURN OFF HEATER 49d

NO

TEMPERATURE IN 4TH WASHING TANK 39 IS BELOW SET RANGE ? — YES → TURN ON HEATER 49d

NO

(B)

FIG.15

B

TEMPERATURE IN 3RD WASHING TANK 38 REACHES SET RANGE ? —YES→ TURN OFF HEATER 49c

NO

TEMPERATURE IN 3RD WASHING TANK 38 IS BELOW SET RANGE ? —YES→ TURN ON HEATER 49c

NO

TEMPERATURE IN 2ND WASHING TANK 37 REACHES SET RANGE ? —YES→ TURN OFF HEATER 49b

NO

TEMPERATURE IN 2ND WASHING TANK 37 IS BELOW SET RANGE ? —YES→ TURN ON HEATER 49b

NO

TEMPERATURE IN 1ST WASHING TANK 36 REACHES SET RANGE ? —YES→ TURN OFF HEATER 49a

NO

TEMPERATURE IN 1ST WASHING TANK 36 IS BELOW SET RANGE ? —YES→ TURN ON HEATER 49a

NO

RETURN